# EUROPEAN PATENT APPLICATION

(11) **EP 2 833 241 A1**
(43) Date of publication of application: **04.02.2015**
(21) Application number: 13830627.9
(22) Date of filing: 20.03.2013
(51) Int. Cl.: G06F 3/01

(54) **CONTROL METHOD FOR ALARM CLOCK OF ELECTRONIC DEVICE AND ELECTRONIC DEVICE**

(30) Priority: 22.08.2012 CN 201210300519
(71) Applicant: Huawei Device Co., Ltd., Shenzhen, Guangdong 518129 (CN)
(72) Inventor: YANG, Yilun, Shenzhen Guangdong 518129 (CN); XU, Ye, Shenzhen Guangdong 518129 (CN)
(74) Representative: Goddar, Heinz J.
(86) International application number: PCT/CN2013/072913
(87) International publication number: WO 2014/029208

(57) **Abstract**

Embodiments of the present invention disclose a method for controlling an alarm clock of an electronic device and an electronic device. The method for controlling an alarm clock of an electronic device includes: detecting a non-contact behavior after the alarm clock of the electronic device is triggered, where the non-contact behavior includes a sound and/or a non-contact action; matching the detected non-contact behavior with at least one standard model; and if the matching is successful, controlling the alarm clock of the electronic device according to an alarm clock control manner corresponding to the successfully matched standard model. The technical solutions provided by the embodiments of the present invention help to simplify a user operation of controlling an alarm clock of an electronic device, thereby improving user experience.

## Description

This application claims priority to Chinese Patent Application No. 201210300519.2, filed with the Chinese Patent Office on August 22, 2012 and entitled "METHOD FOR CONTROLLING ALARM CLOCK OF ELECTRONIC DEVICE AND ELECTRONIC DEVICE", which is incorporated herein by reference in its entirety.

### TECHNICAL FIELD

The present invention relates to the field of electronic technologies, and in particular, to a method for controlling an alarm clock of an electronic device and an electronic device.

### BACKGROUND

At present, as hand-held terminal devices (such as mobile phones and personal digital processing devices) become more intelligent, users have increasing requirements on usability of hand-held terminals.

For example, at present, a touchscreen is disposed on many hand-held terminal devices, such as mobile phones. Sometimes a user may experience the following situation when using a hand-held terminal device with a touchscreen: At present, many users use mobile phones as an alarm clock to wake up in the morning. Generally, light in a bedroom is dim, and when an alarm clock rings, a user normally needs to pick up the mobile phone to watch a screen of the mobile phone. This process is very annoying and has relatively strong irritation to eyes. Moreover, it is relatively complex to perform an operation based on a touchscreen or a key to dismiss and snooze an alarm clock.

### SUMMARY

Embodiments of the present invention provide a method for controlling an alarm clock of an electronic device and an electronic device, so as to simplify a user operation of controlling an alarm clock of an electronic device, thereby improving user experience.

A first aspect of the present invention provides a method for controlling an alarm clock of an electronic device, which may include:
detecting a non-contact behavior after the alarm clock of the electronic device is triggered, where:
   the non-contact behavior includes a sound and/or a non-contact action; and
   matching the detected non-contact behavior with at least one standard model; and if the matching is successful, controlling the alarm clock of the electronic device according to an alarm clock control manner corresponding to the successfully matched standard model.

In a first possible implementation manner of the first aspect, the matching the detected non-contact behavior with at least one standard model includes: matching a behavior parameter corresponding to the detected non-contact behavior with a standard behavior parameter corresponding to the at least one standard model, and if a preset rule is met between the behavior parameter corresponding to the detected non-contact behavior and a standard behavior parameter corresponding to one standard model of the at least one standard model, determining that the detected non-contact behavior successfully matches the one standard model.

With reference to the first aspect of the present invention or the first possible implementation manner of the first aspect, in a second possible implementation manner, the detecting a non-contact behavior after the alarm clock of the electronic device is triggered includes at least one of the following manners: detecting a motion trail of a moving object by using a camera after the alarm clock of the electronic device is triggered, detecting an ambient sound by using a sound pickup apparatus after the alarm clock of the electronic device is triggered, and detecting a distance between, or a change status of a distance between the moving object and the electronic device by using a distance sensor after the alarm clock of the electronic device is triggered.

With reference to the second possible implementation manner of the first aspect, in a third possible implementation manner, if the camera is used to detect the motion trail of the moving object after the alarm clock of the electronic device is triggered, the matching a behavior parameter corresponding to the detected non-contact behavior with a standard behavior parameter corresponding to the at least one standard model, and if a preset rule is met between the behavior parameter corresponding to the detected non-contact behavior and a standard behavior parameter corresponding to one standard model of the at least one standard model, determining that the detected non-contact behavior successfully matches the one standard model includes:
determining a motion direction corresponding to the motion trail of the moving object, where the motion trail is detected by using the camera; matching the determined motion direction with at least one first-type standard motion trail model; and if a difference between the determined motion direction and a standard motion direction that is corresponding to one standard motion trail model of the at least one first-type standard motion trail model is less than or equal to a threshold m1, determining that the detected motion trail successfully matches the one first-type standard motion trail model; or
determining a pattern corresponding to the motion trail of the moving object, where the motion trail is detected by using the camera; matching the determined pattern with at least one second-type standard motion trail model; and if similarity between the determined pattern and a standard pattern that is corresponding to one standard motion trail model of the at least one second-type standard motion trail model is greater than or equal to a threshold m2, determining that the detected motion trail successfully matches the one second-type standard motion trail model; or
determining a motion speed corresponding to the motion trail of the moving object, where the motion trail is detected by using the camera; matching the determined motion speed with at least one third-type standard motion trail model; and if a difference between the determined motion speed and a standard motion speed that is corresponding to one standard motion trail model of the at least one third-type standard motion trail model is less than or equal to a threshold m3, determining that the detected motion trail successfully matches the one third-type standard motion trail model; or
determining a motion speed corresponding to the motion trail of the moving object, where the motion trail is detected by using the camera; matching the determined motion speed with one preconfigured third-type standard motion trail model; and if the determined motion speed is greater than, equal to, or less than a standard motion speed corresponding to the one preconfigured third-type standard motion trail model, determining that the detected motion trail successfully matches the one preconfigured third-type standard motion trail model; or
determining a motion speed corresponding to the motion trail of the moving object, where the motion trail is detected by using the camera; matching the determined motion speed with at least one fourth-type standard motion trail model; and if a difference between the determined motion speed and at least one standard motion speed that is within a standard motion speed range corresponding to one standard motion trail model of the at least one fourth-type standard motion trail model is less than or equal to a threshold m4, determining that the detected motion trail successfully matches the one fourth-type standard motion trail model; or
determining a motion speed corresponding to the motion trail of the moving object, where the motion trail is detected by using the camera; matching the determined motion speed with one preconfigured fourth-type standard motion trail model; and if the determined motion speed is greater than, equal to, or less than at least one standard motion speed within a standard motion speed range corresponding to the one preconfigured fourth-type standard motion trail model, determining that the detected motion trail successfully matches the one preconfigured fourth-type standard motion trail model; or
determining a motion displacement corresponding to the motion trail of the moving object, where the motion trail is detected by using the camera; matching the determined motion displacement with at least one fifth-type standard motion trail model; and if a difference between the determined motion displacement and a standard motion displacement that is corresponding to one standard motion trail model of the at least one fifth-type standard motion trail model is less than or equal to a threshold m5, determining that the detected motion trail successfully matches the one fifth-type standard motion trail model; or
determining a motion displacement corresponding to the motion trail of the moving object, where the motion trail is detected by using the camera; matching the determined motion displacement with one preconfigured fifth-type standard motion trail model; and if the determined motion displacement is greater than, less than, or equal to a standard motion displacement corresponding to the one preconfigured fifth-type standard motion trail model, determining that the detected motion trail successfully matches the one preconfigured fifth-type standard motion trail model; or
determining a motion displacement corresponding to the motion trail of the moving object, where the motion trail is detected by using the camera; matching the determined motion displacement with at least one sixth-type standard motion trail model; and if a difference between the determined motion displacement and at least one standard motion displacement that is within a standard motion displacement range corresponding to one standard motion trail model of the at least one sixth-type standard motion trail model is less than or equal to a threshold m6, determining that the detected motion trail successfully matches the one sixth-type standard motion trail model; or
determining a motion displacement corresponding to the motion trail of the moving object, where the motion trail is detected by using the camera; matching the determined motion displacement with one preconfigured sixth-type standard motion trail model; and if the determined motion displacement is greater than, less than, or equal to at least one standard motion displacement within a standard motion displacement range corresponding to the one preconfigured sixth-type standard motion trail model, determining that the detected motion trail successfully matches the one preconfigured sixth-type standard motion trail model; or
determining a motion duration corresponding to the motion trail of the moving object, where the motion trail is detected by using the camera; matching the determined motion duration with at least one seventh-type standard motion trail model; and if a difference between the determined motion duration and a standard motion duration that is corresponding to one standard motion trail model of the at least one seventh-type standard motion trail model is less than or equal to a threshold m7, determining that the detected motion trail successfully matches the one seventh-type standard motion trail model; or
determining a motion duration corresponding to the motion trail of the moving object, where the motion trail is detected by using the camera; matching the determined motion duration with one preconfigured seventh-type standard motion trail model; and if the determined motion duration is greater than, less than, or equal to a standard motion duration corresponding to the one preconfigured seventh-type standard motion trail model, determining that the detected motion trail successfully matches the one preconfigured seventh-type standard motion trail model; or
determining a motion duration corresponding to the motion trail of the moving object, where the motion trail is detected by using the camera; matching the determined motion duration with at least one eighth-type standard motion trail model; and if a difference between the determined motion duration and at least one standard motion duration that is within a standard motion duration range corresponding to one standard motion trail model of the at least one eighth-type standard motion trail model is less than or equal to a threshold m8, determining that the detected motion trail successfully matches the one eighth-type standard motion trail model; or
determining a motion duration corresponding to the motion trail of the moving object, where the motion trail is detected by using the camera; matching the determined motion duration with one preconfigured eighth-type standard motion trail model; and if the determined motion duration is greater than, less than, or equal to at least one standard motion duration within a standard motion duration range corresponding to the one preconfigured eighth-type standard motion trail model, determining that the detected motion trail successfully matches the one preconfigured eighth-type standard motion trail model.

With reference to the second possible implementation manner of the first aspect, in a fourth possible implementation manner of the first aspect, if the sound pickup apparatus is used to detect the ambient sound after the alarm clock of the electronic device is triggered, the matching a behavior parameter corresponding to the detected non-contact behavior with a standard behavior parameter corresponding to the at least one standard model, and if a preset rule is met between the behavior parameter corresponding to the detected non-contact behavior and a standard behavior parameter corresponding to one standard model of the at least one standard model, determining that the detected non-contact behavior successfully matches the one standard model includes: acquiring a volume value corresponding to the sound detected by using the sound pickup apparatus; matching the acquired volume value with at least one first-type standard sound model; and if a difference between the acquired volume value and a standard volume value that is corresponding to one standard sound model of the at least one first-type standard sound model is less than or equal to a threshold n1, determining that the detected sound successfully matches the one first-type standard sound model; or
acquiring a volume value corresponding to the sound detected by using the sound pickup apparatus; matching the acquired volume value with one preconfigured first-type standard sound model; and if the acquired volume value is greater than, equal to, or less than a standard volume value corresponding to the one preconfigured first-type standard sound model, determining that the detected sound successfully matches the one preconfigured first-type standard sound model; or
acquiring a volume value corresponding to the sound detected by using the sound pickup apparatus; matching the acquired volume value with at least one second-type standard sound model; and if a difference between the acquired volume value and at least one standard volume value that is within a standard volume value range corresponding to one standard sound model of the at least one second-type standard sound model is less than or equal to a threshold n2, determining that the detected sound successfully matches the one second-type standard sound model; or
acquiring a volume value corresponding to the sound detected by using the sound pickup apparatus; matching the acquired volume value with one preconfigured second-type standard sound model; and if the acquired volume value is greater than, equal to, or less than at least one standard volume value within a standard volume value range corresponding to the one preconfigured second-type standard sound model, determining that the detected sound successfully matches the one preconfigured second-type standard sound model; or
acquiring an audio frequency value corresponding to the sound detected by using the sound pickup apparatus; matching the acquired audio frequency value with at least one third-type standard sound model; and if a difference between the acquired audio frequency value and a standard audio frequency value that is corresponding to one standard sound model of the at least one third-type standard sound model is less than or equal to a threshold n3, determining that the detected sound successfully matches the one third-type standard sound model; or
acquiring an audio frequency value corresponding to the sound detected by using the sound pickup apparatus; matching the acquired audio frequency value with one preconfigured third-type standard sound model; and if the acquired audio frequency value is greater than, equal to, or less than a standard audio frequency value corresponding to the one preconfigured third-type standard sound model, determining that the detected sound successfully matches the one preconfigured third-type standard sound model; or
acquiring an audio frequency value corresponding to the sound detected by using the sound pickup apparatus; matching the acquired audio frequency value with at least one fourth-type standard sound model; and if a difference between the acquired audio frequency value and at least one standard audio frequency value that is within a standard audio frequency value range corresponding to one standard sound model of the at least one fourth-type standard sound model is less than or equal to a threshold n4, determining that the detected sound successfully matches the one fourth-type standard sound model; or
acquiring an audio frequency value corresponding to the sound detected by using the sound pickup apparatus; matching the acquired audio frequency value with one preconfigured fourth-type standard sound model; and if the acquired audio frequency value is greater than, equal to, or less than at least one standard audio frequency value within a standard audio frequency value range corresponding to the one preconfigured fourth-type standard sound model, determining that the detected sound successfully matches the one preconfigured fourth-type standard sound model; or
acquiring an audio frequency change trend corresponding to the sound detected by using the sound pickup apparatus; matching the acquired audio frequency change trend with at least one fifth-type standard sound model; and if the acquired audio frequency change trend is the same as a standard audio frequency change trend corresponding to one standard sound model of the at least one fifth-type standard sound model, determining that the detected sound successfully matches the one fifth-type standard sound model; or
acquiring a volume change trend corresponding to the sound detected by using the sound pickup apparatus; matching the acquired volume change trend with at least one sixth-type standard sound model; and if the acquired volume change trend is the same as a standard volume change trend corresponding to one standard sound model of the at least one sixth-type standard sound model, determining that the detected sound successfully matches the one sixth-type standard sound model; or
acquiring an audio frequency change rate corresponding to the sound detected by using the sound pickup apparatus; matching the acquired audio frequency change rate with at least one seventh-type standard sound model; and if a difference between the acquired audio frequency change rate and a standard audio frequency change rate that is corresponding to one standard sound model of the at least one seventh-type standard sound model is less than or equal to a threshold n5, determining that the detected sound successfully matches the one seventh-type standard sound model; or
acquiring an audio frequency change rate corresponding to the sound detected by using the sound pickup apparatus; matching the acquired audio frequency change rate with one preconfigured seventh-type standard sound model; and if the acquired audio frequency change rate is greater than, equal to, or less than a standard audio frequency change rate corresponding to the one preconfigured seventh-type standard sound model, determining that the detected sound successfully matches the one preconfigured seventh-type standard sound model; or
acquiring an audio frequency change rate corresponding to the sound detected by using the sound pickup apparatus; matching the acquired audio frequency change rate with at least one eighth-type standard sound model; and if a difference between the acquired audio frequency change rate and at least one audio frequency change rate that is within a standard audio frequency change rate range corresponding to one standard sound model of the at least one eighth-type standard sound model is less than or equal to a threshold n6, determining that the detected sound successfully matches the one eighth-type standard sound model; or
acquiring an audio frequency change rate corresponding to the sound detected by using the sound pickup apparatus; matching the acquired audio frequency change rate with one preconfigured eighth-type standard sound model; and if the acquired audio frequency change rate is greater than, equal to, or less than at least one standard audio frequency change rate within a standard audio frequency change rate range corresponding to the one preconfigured eighth-type standard sound model, determining that the detected sound successfully matches the one preconfigured eighth-type standard sound model; or
acquiring a volume change rate corresponding to the sound detected by using the sound pickup apparatus; matching the acquired volume change rate with at least one ninth-type standard sound model; and if a difference between the acquired volume change rate and a standard volume change rate that is corresponding to one standard sound model of the at least one ninth-type standard sound model is less than or equal to a threshold n7, determining that the detected sound successfully matches the one ninth-type standard sound model; or
acquiring a volume change rate corresponding to the sound detected by using the sound pickup apparatus; matching the acquired volume change rate with one preconfigured ninth-type standard sound model; and if the acquired volume change rate is greater than, equal to, or less than a standard volume change rate corresponding to the one preconfigured ninth-type standard sound model, determining that the detected sound successfully matches the one preconfigured ninth-type standard sound model; or
acquiring a volume change rate corresponding to the sound detected by using the sound pickup apparatus; matching the acquired volume change rate with at least one tenth-type standard sound model; and if a difference between the acquired volume change rate and at least one volume change rate that is within a standard volume change rate range corresponding to one standard sound model of the at least one tenth-type standard sound model is less than or equal to a threshold n8, determining that the detected sound successfully matches the one tenth-type standard sound model; or
acquiring a volume change rate corresponding to the sound detected by using the sound pickup apparatus; matching the acquired volume change rate with one preconfigured tenth-type standard sound model; and if the acquired volume change rate is greater than, equal to, or less than at least one standard volume change rate within a standard volume change rate range corresponding to the one preconfigured tenth-type standard sound model, determining that the detected sound successfully matches the one preconfigured tenth-type standard sound model; or
acquiring a duration corresponding to the sound detected by using the sound pickup apparatus; matching the acquired duration with at least one eleventh-type standard sound model; and if a difference between the acquired duration and a standard duration that is corresponding to one standard sound model of the at least one eleventh-type standard sound model is less than or equal to a threshold n9, determining that the detected sound successfully matches the one eleventh-type standard sound model; or
acquiring a duration corresponding to the sound detected by using the sound pickup apparatus; matching the acquired duration with one preconfigured eleventh-type standard sound model; and if the acquired duration is greater than, equal to, or less than a standard duration corresponding to the one preconfigured eleventh-type standard sound model, determining that the detected sound successfully matches the one preconfigured eleventh-type standard sound model; or
acquiring a duration corresponding to the sound detected by using the sound pickup apparatus; matching the acquired duration with at least one twelfth-type standard sound model; and if a difference between the acquired duration and at least one standard duration that is within a standard duration range corresponding to one standard sound model of the at least one twelfth-type standard sound model is less than or equal to a threshold n10, determining that the detected sound successfully matches the one twelfth-type standard sound model; or
acquiring a duration corresponding to the sound detected by using the sound pickup apparatus; matching the acquired duration with one preconfigured twelfth-type standard sound model; and if the acquired duration is greater than, equal to, or less than at least one standard duration within a standard duration range corresponding to the one preconfigured twelfth-type standard sound model, determining that the detected sound successfully matches the one preconfigured twelfth-type standard sound model; or
converting the sound detected by using the sound pickup apparatus into a corresponding sound digital signal; matching the sound digital signal, which is obtained by means of conversion, with at least one thirteenth-type standard sound model; and if a difference between the sound digital signal and a standard sound digital signal that is corresponding to one standard sound model of the at least one thirteenth-type standard sound model is less than or equal to a threshold n11, determining that the detected sound successfully matches the one thirteenth-type standard sound model.

With reference to the second possible implementation manner of the first aspect, in a fifth possible implementation manner of the first aspect, if the distance sensor is used to detect the distance between, or the change status of the distance between the moving object and the electronic device after the alarm clock of the electronic device is triggered, the matching a behavior parameter corresponding to the detected non-contact behavior with a standard behavior parameter corresponding to the at least one standard model, and if a preset rule is met between the behavior parameter corresponding to the detected non-contact behavior and a standard behavior parameter corresponding to one standard model of the at least one standard model, determining that the detected non-contact behavior successfully matches the one standard model includes:
matching the distance between the moving object and the electronic device and at least one first-type standard distance model, where the distance is detected by using the distance sensor; and if a difference between the distance and a standard distance that is corresponding to one standard distance model of the at least one first-type standard distance model is less than or equal to a threshold s1, determining that the detected distance successfully matches the one first-type standard distance model; or
matching the distance between the moving object and the electronic device and at least one first-type standard distance model, where the distance is detected by using the distance sensor; and if the distance is greater than, less than, or equal to a standard distance corresponding to the one preconfigured first-type standard distance model, determining that the detected distance successfully matches the one preconfigured first-type standard distance model; or
matching the distance between the moving object and the electronic device and at least one first-type standard distance model, where the distance is detected by using the distance sensor; and if a difference between the distance and at least one standard distance that is within a standard distance range corresponding to one standard distance model of the at least one second-type standard distance model is less than or equal to a threshold s2, determining that the detected distance successfully matches the one second-type standard distance model; or
matching the distance between the moving object and the electronic device and one preconfigured second-type standard distance model, where the distance is detected by using the distance sensor; and if the distance is greater than, less than, or equal to at least one standard distance within a standard distance range corresponding to the one preconfigured second-type standard distance model, determining that the detected distance successfully matches the one preconfigured second-type standard distance model; or
matching a distance change rate between the moving object and the electronic device and at least one third-type standard distance model, where the distance is detected by using the distance sensor; and if a difference between the distance change rate and a standard distance change rate that is corresponding to one standard distance model of the at least one third-type standard distance model is less than or equal to a threshold s3, determining that the detected distance change rate successfully matches the one third-type standard distance model; or
matching a distance change rate between the moving object and the electronic device and one preconfigured third-type standard distance model, where the distance is detected by using the distance sensor; and if the distance change rate is greater than, less than, or equal to a standard distance change rate corresponding to the one preconfigured third-type standard distance model, determining that the detected distance change rate successfully matches the one preconfigured third-type standard distance model; or
matching a distance change rate between the moving object and the electronic device and at least one fourth-type standard distance model, where the distance is detected by using the distance sensor; and if a difference between the distance change rate and at least one standard distance change rate that is within a standard distance change rate range corresponding to one standard distance model of the at least one fourth-type standard distance model is less than or equal to a threshold s4, determining that the detected distance change rate successfully matches the one fourth-type standard distance model; or
matching a distance change rate between the moving object and the electronic device and one preconfigured fourth-type standard distance model, where the distance is detected by using the distance sensor; and if the distance change rate is greater than, less than, or equal to at least one standard distance change rate within a standard distance change rate range corresponding to the one preconfigured fourth-type standard distance model, determining that the detected distance change rate successfully matches the one preconfigured fourth-type standard distance model; or
matching a distance change duration between the moving object and the electronic device and at least one fifth-type standard distance model, where the distance is detected by using the distance sensor; and if a difference between the distance change duration and a standard distance change duration that is corresponding to one standard distance model of the at least one fifth-type standard distance model is less than or equal to a threshold s5, determining that the detected distance change duration successfully matches the one fifth-type standard distance model; or
matching a distance change duration between the moving object and the electronic device and one preconfigured fifth-type standard distance model, where the distance is detected by using the distance sensor; and if the distance change duration is greater than, less than, or equal to a standard distance change duration corresponding to the one preconfigured fifth-type standard distance model, determining that the detected distance change duration successfully matches the one preconfigured fifth-type standard distance model; or
matching a distance change duration between the moving object and the electronic device and at least one sixth-type standard distance model, where the distance is detected by using the distance sensor; and if a difference between the distance change duration and at least one standard distance change duration that is within a standard distance change duration range corresponding to one standard distance model of the at least one sixth-type standard distance model is less than or equal to a threshold s6, determining that the detected distance change duration successfully matches the one sixth-type standard distance model; or
matching a distance change duration between the moving object and the electronic device and one preconfigured sixth-type standard distance model, where the distance is detected by using the distance sensor; and if the distance change duration is greater than, less than, or equal to at least one standard distance change duration within a standard distance change duration range corresponding to the one preconfigured sixth-type standard distance model, determining that the detected distance change duration successfully matches the one preconfigured sixth-type standard distance model; or
matching a distance change trend between the moving object and the electronic device and at least one seventh-type standard distance model, where the distance is detected by using the distance sensor; and if the distance change trend is the same as a standard distance change trend corresponding to one standard distance model of the seventh-type standard distance model, determining that the detected distance change rate successfully matches the one seventh-type standard distance model.

With reference to the first aspect of the present invention or the first possible implementation manner of the first aspect or the second possible implementation manner of the first aspect or the third possible implementation manner of the first aspect or the fourth possible implementation manner of the first aspect or the fifth possible implementation manner of the first aspect, in a sixth possible implementation manner of the first aspect, the controlling the alarm clock of the electronic device includes: stopping the alarm clock of the electronic device, snoozing the alarm clock of the electronic device, adjusting a volume of the alarm clock of the electronic device, or adjusting music of the alarm clock of the electronic device.

With reference to the first aspect of the present invention or the first possible implementation manner of the first aspect or the second possible implementation manner of the first aspect or the third possible implementation manner of the first aspect or the fourth possible implementation manner of the first aspect or the fifth possible implementation manner of the first aspect or the sixth possible implementation manner of the first aspect, in a seventh possible implementation manner of the first aspect, the method further includes: if the matching is successful, adjusting screen brightness of the electronic device according to a screen brightness adjustment manner corresponding to the successfully matched standard model.

With reference to the first aspect of the present invention or the first possible implementation manner of the first aspect or the second possible implementation manner of the first aspect or the third possible implementation manner of the first aspect or the fourth possible implementation manner of the first aspect or the fifth possible implementation manner of the first aspect or the sixth possible implementation manner of the first aspect or the seventh possible implementation manner of the first aspect, in an eighth possible implementation manner of the first aspect, the method further includes: if the matching fails, performing at least one of the following operations:
sending a control instruction to at least one second electronic device, so as to control the second electronic device to work;
gradually increasing a volume of the alarm clock to a maximum value;
if the electronic device is a communications terminal, selecting at least one telephone number to simulate an incoming call; and
if the electronic device is a communications terminal, selecting at least one telephone number to make an outgoing call.

A second aspect of the present invention provides an electronic device, including:
a detecting unit, configured to detect a non-contact behavior after an alarm clock of the electronic device is triggered, where the non-contact behavior includes a sound and/or a non-contact action;
a matching unit, configured to match the non-contact behavior, which is detected by the detecting unit, with at least one standard model; and
a control unit, configured to: if the matching unit performs matching successfully, control the alarm clock of the electronic device according to an alarm clock control manner corresponding to the successfully matched standard model.

In a first possible implementation manner of the second aspect, the matching unit is specifically configured to match a behavior parameter corresponding to the detected non-contact behavior with a standard behavior parameter corresponding to the at least one standard model, and if a preset rule is met between the behavior parameter corresponding to the detected non-contact behavior and a standard behavior parameter corresponding to one standard model of the at least one standard model, determine that the detected non-contact behavior successfully matches the one standard model.

With reference to the second aspect of the present invention or the first possible implementation manner of the second aspect, in a second possible implementation manner of the second aspect, the detecting unit is specifically configured to detect, after the alarm clock of the electronic device is triggered, the non-contact behavior in at least one of the following manners: detect a motion trail of a moving object by using a camera after the alarm clock of the electronic device is triggered, detect an ambient sound by using a sound pickup apparatus after the alarm clock of the electronic device is triggered, and detect a distance between, or a change status of a distance between the moving object and the electronic device by using a distance sensor after the alarm clock of the electronic device is triggered.

With reference to the second possible implementation manner of the second aspect, in a third possible implementation manner of the second aspect, if the detecting unit detects the motion trail of the moving object by using the camera after the alarm clock of the electronic device is triggered, the matching unit is specifically configured to:
determine a motion direction corresponding to the motion trail of the moving object, where the motion trail is detected by using the camera; match the determined motion direction with at least one first-type standard motion trail model; and if a difference between the determined motion direction and a standard motion direction that is corresponding to one standard motion trail model of the at least one first-type standard motion trail model is less than or equal to a threshold m1, determine that the detected motion trail successfully matches the one first-type standard motion trail model; or
determine a pattern corresponding to the motion trail of the moving object, where the motion trail is detected by using the camera; match the determined pattern with at least one second-type standard motion trail model; and if similarity between the determined pattern and a standard pattern that is corresponding to one standard motion trail model of the at least one second-type standard motion trail model is greater than or equal to a threshold m2, determine that the detected motion trail successfully matches the one second-type standard motion trail model; or
determine a motion speed corresponding to the motion trail of the moving object, where the motion trail is detected by using the camera; match the determined motion speed with at least one third-type standard motion trail model; and if a difference between the determined motion speed and a standard motion speed that is corresponding to one standard motion trail model of the at least one third-type standard motion trail model is less than or equal to a threshold m3, determine that the detected motion trail successfully matches the one third-type standard motion trail model; or
determining a motion speed corresponding to the motion trail of the moving object, where the motion trail is detected by using the camera; matching the determined motion speed with one preconfigured third-type standard motion trail model; and if the determined motion speed is greater than, equal to, or less than a standard motion speed corresponding to the one preconfigured third-type standard motion trail model, determine that the detected motion trail successfully matches the one preconfigured third-type standard motion trail model; or
determine a motion speed corresponding to the motion trail of the moving object, where the motion trail is detected by using the camera; match the determined motion speed with at least one fourth-type standard motion trail model; and if a difference between the determined motion speed and at least one standard motion speed that is within a standard motion speed range corresponding to one standard motion trail model of the at least one fourth-type standard motion trail model is less than or equal to a threshold m4, determine that the detected motion trail successfully matches the one fourth-type standard motion trail model; or
determine a motion speed corresponding to the motion trail of the moving object, where the motion trail is detected by using the camera; match the determined motion speed with one preconfigured fourth-type standard motion trail model; and if the determined motion speed is greater than, equal to, or less than at least one standard motion speed within a standard motion speed range corresponding to the one preconfigured fourth-type standard motion trail model, determine that the detected motion trail successfully matches the one preconfigured fourth-type standard motion trail model; or
determine a motion displacement corresponding to the motion trail of the moving object, where the motion trail is detected by using the camera; match the determined motion displacement with at least one fifth-type standard motion trail model; and if a difference between the determined motion displacement and a standard motion displacement that is corresponding to one standard motion trail model of the at least one fifth-type standard motion trail model is less than or equal to a threshold m5, determine that the detected motion trail successfully matches the one fifth-type standard motion trail model; or
determine a motion displacement corresponding to the motion trail of the moving object, where the motion trail is detected by using the camera; match the determined motion displacement with one preconfigured fifth-type standard motion trail model; and if the determined motion displacement is greater than, less than, or equal to a standard motion displacement corresponding to the one preconfigured fifth-type standard motion trail model, determine that the detected motion trail successfully matches the one preconfigured fifth-type standard motion trail model; or
determine a motion displacement corresponding to the motion trail of the moving object, where the motion trail is detected by using the camera; match the determined motion displacement with at least one sixth-type standard motion trail model; and if a difference between the determined motion displacement and at least one standard motion displacement that is within a standard motion displacement range corresponding to one standard motion trail model of the at least one sixth-type standard motion trail model is less than or equal to a threshold m6, determine that the detected motion trail successfully matches the one sixth-type standard motion trail model; or
determine a motion displacement corresponding to the motion trail of the moving object, where the motion trail is detected by using the camera; match the determined motion displacement with one preconfigured sixth-type standard motion trail model; and if the determined motion displacement is greater than, less than, or equal to at least one standard motion displacement within a standard motion displacement range corresponding to the one preconfigured sixth-type standard motion trail model, determine that the detected motion trail successfully matches the one preconfigured sixth-type standard motion trail model; or
determine a motion duration corresponding to the motion trail of the moving object, where the motion trail is detected by using the camera; match the determined motion duration with at least one seventh-type standard motion trail model; and if a difference between the determined motion duration and a standard motion duration that is corresponding to one standard motion trail model of the at least one seventh-type standard motion trail model is less than or equal to a threshold m7, determine that the detected motion trail successfully matches the one seventh-type standard motion trail model; or
determine a motion duration corresponding to the motion trail of the moving object, where the motion trail is detected by using the camera; match the determined motion duration with one preconfigured seventh-type standard motion trail model; and if the determined motion duration is greater than, less than, or equal to a standard motion duration corresponding to the one preconfigured seventh-type standard motion trail model, determine that the detected motion trail successfully matches the one preconfigured seventh-type standard motion trail model; or
determine a motion duration corresponding to the motion trail of the moving object, where the motion trail is detected by using the camera; match the determined motion duration with at least one eighth-type standard motion trail model; and if a difference between the determined motion duration and at least one standard motion duration that is within a standard motion duration range corresponding to one standard motion trail model of the at least one eighth-type standard motion trail model is less than or equal to a threshold m8, determine that the detected motion trail successfully matches the one eighth-type standard motion trail model; or
determine a motion duration corresponding to the motion trail of the moving object, where the motion trail is detected by using the camera; match the determined motion duration with one preconfigured eighth-type standard motion trail model; and if the determined motion duration is greater than, less than, or equal to at least one standard motion duration within a standard motion duration range corresponding to the one preconfigured eighth-type standard motion trail model, determine that the detected motion trail successfully matches the one preconfigured eighth-type standard motion trail model.

With reference to the second possible implementation manner of the second aspect of the present invention, in a fourth possible implementation manner of the second aspect, if the detecting unit detects the ambient sound by using the sound pickup apparatus after the alarm clock of the electronic device is triggered, the matching unit is specifically configured to:
acquire a volume value corresponding to the sound detected by using the sound pickup apparatus; match the acquired volume value with at least one first-type standard sound model; and if a difference between the acquired volume value and a standard volume value that is corresponding to one standard sound model of the at least one first-type standard sound model is less than or equal to a threshold n1, determine that the detected sound successfully matches the one first-type standard sound model; or
acquire a volume value corresponding to the sound detected by using the sound pickup apparatus; match the acquired volume value with one preconfigured first-type standard sound model; and if the acquired volume value is greater than, equal to, or less than a standard volume value corresponding to the one preconfigured first-type standard sound model, determine that the detected sound successfully matches the one preconfigured first-type standard sound model; or
acquire a volume value corresponding to the sound detected by using the sound pickup apparatus; match the acquired volume value with at least one second-type standard sound model; and if a difference between the acquired volume value and at least one standard volume value that is within a standard volume value range corresponding to one standard sound model of the at least one second-type standard sound model is less than or equal to a threshold n2, determine that the detected sound successfully matches the one second-type standard sound model; or
acquire a volume value corresponding to the sound detected by using the sound pickup apparatus; match the acquired volume value with one preconfigured second-type standard sound model; and if the acquired volume value is greater than, equal to, or less than at least one standard volume value within a standard volume value range corresponding to the one preconfigured second-type standard sound model, determine that the detected sound successfully matches the one preconfigured second-type standard sound model; or
acquire an audio frequency value corresponding to the sound detected by using the sound pickup apparatus; match the acquired audio frequency value with at least one third-type standard sound model; and if a difference between the acquired audio frequency value and a standard audio frequency value that is corresponding to one standard sound model of the at least one third-type standard sound model is less than or equal to a threshold n3, determine that the detected sound successfully matches the one third-type standard sound model; or
acquire an audio frequency value corresponding to the sound detected by using the sound pickup apparatus; match the acquired audio frequency value with one preconfigured third-type standard sound model; and if the acquired audio frequency value is greater than, equal to, or less than a standard audio frequency value corresponding to the one preconfigured third-type standard sound model, determine that the detected sound successfully matches the one preconfigured third-type standard sound model; or
acquire an audio frequency value corresponding to the sound detected by using the sound pickup apparatus; match the acquired audio frequency value with at least one fourth-type standard sound model; and if a difference between the acquired audio frequency value and at least one standard audio frequency value that is within a standard audio frequency value range corresponding to one standard sound model of the at least one fourth-type standard sound model is less than or equal to a threshold n4, determine that the detected sound successfully matches the one fourth-type standard sound model; or
acquire an audio frequency value corresponding to the sound detected by using the sound pickup apparatus; match the acquired audio frequency value with one preconfigured fourth-type standard sound model; and if the acquired audio frequency value is greater than, equal to, or less than at least one standard audio frequency value within a standard audio frequency value range corresponding to the one preconfigured fourth-type standard sound model, determine that the detected sound successfully matches the one preconfigured fourth-type standard sound model; or
acquire an audio frequency change trend corresponding to the sound detected by using the sound pickup apparatus; match the acquired audio frequency change trend with at least one fifth-type standard sound model; and if the acquired audio frequency change trend is the same as a standard audio frequency change trend corresponding to one standard sound model of the at least one fifth-type standard sound model, determine that the detected sound successfully matches the one fifth-type standard sound model; or
acquire a volume change trend corresponding to the sound detected by using the sound pickup apparatus; match the acquired volume change trend with at least one sixth-type standard sound model; and if the acquired volume change trend is the same as a standard volume change trend corresponding to one standard sound model of the at least one sixth-type standard sound model, determine that the detected sound successfully matches the one sixth-type standard sound model; or
acquire an audio frequency change rate corresponding to the sound detected by using the sound pickup apparatus; match the acquired audio frequency change rate with at least one seventh-type standard sound model; and if a difference between the acquired audio frequency change rate and a standard audio frequency change rate that is corresponding to one standard sound model of the at least one seventh-type standard sound model is less than or equal to a threshold n5, determine that the detected sound successfully matches the one seventh-type standard sound model; or
acquire an audio frequency change rate corresponding to the sound detected by using the sound pickup apparatus; match the acquired audio frequency change rate with one preconfigured seventh-type standard sound model; and if the acquired audio frequency change rate is greater than, equal to, or less than a standard audio frequency change rate corresponding to the one preconfigured seventh-type standard sound model, determine that the detected sound successfully matches the one preconfigured seventh-type standard sound model; or
acquire an audio frequency change rate corresponding to the sound detected by using the sound pickup apparatus; match the acquired audio frequency change rate with at least one eighth-type standard sound model; and if a difference between the acquired audio frequency change rate and at least one audio frequency change rate that is within a standard audio frequency change rate range corresponding to one standard sound model of the at least one eighth-type standard sound model is less than or equal to a threshold n6, determine that the detected sound successfully matches the one eighth-type standard sound model; or
acquire an audio frequency change rate corresponding to the sound detected by using the sound pickup apparatus; match the acquired audio frequency change rate with one preconfigured eighth-type standard sound model; and if the acquired audio frequency change rate is greater than, equal to, or less than at least one standard audio frequency change rate within a standard audio frequency change rate range corresponding to the one preconfigured eighth-type standard sound model, determine that the detected sound successfully matches the one preconfigured eighth-type standard sound model; or
acquire a volume change rate corresponding to the sound detected by using the sound pickup apparatus; match the acquired volume change rate with at least one ninth-type standard sound model; and if a difference between the acquired volume change rate and a standard volume change rate that is corresponding to one standard sound model of the at least one ninth-type standard sound model is less than or equal to a threshold n7, determine that the detected sound successfully matches the one ninth-type standard sound model; or
acquire a volume change rate corresponding to the sound detected by using the sound pickup apparatus; match the acquired volume change rate with one preconfigured ninth-type standard sound model; and if the acquired volume change rate is greater than, equal to, or less than a standard volume change rate corresponding to the one preconfigured ninth-type standard sound model, determine that the detected sound successfully matches the one preconfigured ninth-type standard sound model; or
acquire a volume change rate corresponding to the sound detected by using the sound pickup apparatus; match the acquired volume change rate with at least one tenth-type standard sound model; and if a difference between the acquired volume change rate and at least one volume change rate that is within a standard volume change rate range corresponding to one standard sound model of the at least one tenth-type standard sound model is less than or equal to a threshold n8, determine that the detected sound successfully matches the one tenth-type standard sound model; or
acquire a volume change rate corresponding to the sound detected by using the sound pickup apparatus; match the acquired volume change rate with one preconfigured tenth-type standard sound model; and if the acquired volume change rate is greater than, equal to, or less than at least one standard volume change rate within a standard volume change rate range corresponding to the one preconfigured tenth-type standard sound model, determine that the detected sound successfully matches the one preconfigured tenth-type standard sound model; or
acquire a duration corresponding to the sound detected by using the sound pickup apparatus; match the acquired duration with at least one eleventh-type standard sound model; and if a difference between the acquired duration and a standard duration that is corresponding to one standard sound model of the at least one eleventh-type standard sound model is less than or equal to a threshold n9, determine that the detected sound successfully matches the one eleventh-type standard sound model; or
acquire a duration corresponding to the sound detected by using the sound pickup apparatus; match the acquired duration with one preconfigured eleventh-type standard sound model; and if the acquired duration is greater than, equal to, or less than a standard duration corresponding to the one preconfigured eleventh-type standard sound model, determine that the detected sound successfully matches the one preconfigured eleventh-type standard sound model; or
acquire a duration corresponding to the sound detected by using the sound pickup apparatus; match the acquired duration with at least one twelfth-type standard sound model; and if a difference between the acquired duration and at least one standard duration that is within a standard duration range corresponding to one standard sound model of the at least one twelfth-type standard sound model is less than or equal to a threshold n10, determine that the detected sound successfully matches the one twelfth-type standard sound model; or
acquire a duration corresponding to the sound detected by using the sound pickup apparatus; match the acquired duration with one preconfigured twelfth-type standard sound model; and if the acquired duration is greater than, equal to, or less than at least one standard duration within a standard duration range corresponding to the one preconfigured twelfth-type standard sound model, determine that the detected sound successfully matches the one preconfigured twelfth-type standard sound model; or
convert the sound detected by using the sound pickup apparatus into a corresponding sound digital signal; match the sound digital signal, which is obtained by means of conversion, with at least one thirteenth-type standard sound model; and if a difference between the sound digital signal and a standard sound digital signal that is corresponding to one standard sound model of the at least one thirteenth-type standard sound model is less than or equal to a threshold n11, determine that the detected sound successfully matches the one thirteenth-type standard sound model.

With reference to the second possible implementation manner of the second aspect of the present invention, in a fifth possible implementation manner of the second aspect, if the detecting unit detects the distance between, or the change status of the distance between the moving object and the electronic device by using the distance sensor after the alarm clock of the electronic device is triggered, the matching unit is specifically configured to: match the distance between the moving object and the electronic device and at least one first-type standard distance model, where the distance is detected by using the distance sensor; and if a difference between the distance and a standard distance that is corresponding to one standard distance model of the at least one first-type standard distance model is less than or equal to a threshold s1, determine that the detected distance successfully matches the one first-type standard distance model; or
match the distance between the moving object and the electronic device and one preconfigured first-type standard distance model, where the distance is detected by using the distance sensor; and if the distance is greater than, less than, or equal to a standard distance corresponding to the one preconfigured first-type standard distance model, determine that the detected distance successfully matches the one preconfigured first-type standard distance model; or
match the distance between the moving object and the electronic device and at least one first-type standard distance model, where the distance is detected by using the distance sensor; and if a difference between the distance and at least one standard distance that is within a standard distance range corresponding to one standard distance model of the at least one second-type standard distance model is less than or equal to a threshold s2, determine that the detected distance successfully matches the one second-type standard distance model; or
match the distance between the moving object and the electronic device and one preconfigured second-type standard distance model, where the distance is detected by using the distance sensor; and if the distance is greater than, less than, or equal to at least one standard distance within a standard distance range corresponding to the one preconfigured second-type standard distance model, determine that the detected distance successfully matches the one preconfigured second-type standard distance model; or
match a distance change rate between the moving object and the electronic device and at least one third-type standard distance model, where the distance is detected by using the distance sensor; and if a difference between the distance change rate and a standard distance change rate that is corresponding to one standard distance model of the at least one third-type standard distance model is less than or equal to a threshold s3, determine that the detected distance change rate successfully matches the one third-type standard distance model; or
match a distance change rate between the moving object and the electronic device and one preconfigured third-type standard distance model, where the distance is detected by using the distance sensor; and if the distance change rate is greater than, less than, or equal to a standard distance change rate corresponding to the one preconfigured third-type standard distance model, determine that the detected distance change rate successfully matches the one preconfigured third-type standard distance model; or
match a distance change rate between the moving object and the electronic device and at least one fourth-type standard distance model, where the distance is detected by using the distance sensor; and if a difference between the distance change rate and at least one standard distance change rate that is within a standard distance change rate range corresponding to one standard distance model of the at least one fourth-type standard distance model is less than or equal to a threshold s4, determine that the detected distance change rate successfully matches the one fourth-type standard distance model; or
match a distance change rate between the moving object and the electronic device and one preconfigured fourth-type standard distance model, where the distance is detected by using the distance sensor; and if the distance change rate is greater than, less than, or equal to at least one standard distance change rate within a standard distance change rate range corresponding to the one preconfigured fourth-type standard distance model, determine that the detected distance change rate successfully matches the one preconfigured fourth-type standard distance model; or
match a distance change duration between the moving object and the electronic device and at least one fifth-type standard distance model, where the distance is detected by using the distance sensor; and if a difference between the distance change duration and a standard distance change duration that is corresponding to one standard distance model of the at least one fifth-type standard distance model is less than or equal to a threshold s5, determine that the detected distance change duration successfully matches the one fifth-type standard distance model; or
match a distance change duration between the moving object and the electronic device and one preconfigured fifth-type standard distance model, where the distance is detected by using the distance sensor; and if the distance change duration is greater than, less than, or equal to a standard distance change duration corresponding to the one preconfigured fifth-type standard distance model, determine that the detected distance change duration successfully matches the one preconfigured fifth-type standard distance model; or
match a distance change duration between the moving object and the electronic device and at least one sixth-type standard distance model, where the distance is detected by using the distance sensor; and if a difference between the distance change duration and at least one standard distance change duration that is within a standard distance change duration range corresponding to one standard distance model of the at least one sixth-type standard distance model is less than or equal to a threshold s6, determine that the detected distance change duration successfully matches the one sixth-type standard distance model; or
match a distance change duration between the moving object and the electronic device and one preconfigured sixth-type standard distance model, where the distance is detected by using the distance sensor; and if the distance change duration is greater than, less than, or equal to at least one standard distance change duration within a standard distance change duration range corresponding to the one preconfigured sixth-type standard distance model, determine that the detected distance change duration successfully matches the one preconfigured sixth-type standard distance model; or
match a distance change trend between the moving object and the electronic device and at least one seventh-type standard distance model, where the distance is detected by using the distance sensor; and if the distance change trend is the same as a standard distance change trend corresponding to one standard distance model of the seventh-type standard distance model, determine that the detected distance change rate successfully matches the one seventh-type standard distance model.

As can be seen from the above, in the embodiments of the present invention, a non-contact behavior is detected after an alarm clock of an electronic device is triggered, and the electronic device matches the detected non-contact behavior with at least one standard model, and if the matching is successful, controls the alarm clock of the electronic device according to an alarm clock control manner corresponding to the successfully matched standard model. Because the alarm clock of the electronic device is controlled by using the non-contact behavior, the user may perform controlling, such as stopping or snoozing the alarm clock, without direct contact with the electronic device. This helps to simplify a user operation of controlling the alarm clock of the electronic device and may reduce eye irritation of the user, thereby improving user experience.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic flowchart of a method for controlling an alarm clock of an electronic device according to an embodiment of the present invention;
FIG. 2 is a schematic diagram of an electronic device according to an embodiment of the present invention; and
FIG. 3 is a schematic diagram of another electronic device according to an embodiment of the present invention.

### DESCRIPTION OF EMBODIMENTS

To make the objectives, features, and advantages of the present invention more comprehensible, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

Terms "first", "second", "third", "fourth" and the like (if exist) in the specification, claims, and the accompanying drawings of the present invention are used to differentiate similar objects, and are not necessarily used to describe a specific sequence or order. It should be understood that data used in this case is interchangeable, so that the embodiments of the present invention described herein may be, for example, implemented in a sequence except that shown or described herein. In addition, terms "include", "have" and any variants of them are intended to mean non-exclusive including. For example, processes, methods, systems, products, or devices that include a series of steps or units are not necessarily limited to the steps or units that are clearly listed, but may also include other steps or units that are not clearly listed or are inherent in these processes, methods, products, or devices.

Detailed descriptions are provided as follows respectively.

According to an embodiment of a method for controlling an alarm clock of an electronic device in the present invention, the method may include: detecting a non-contact behavior after the alarm clock of the electronic device is triggered, where the non-contact behavior includes a sound and/or a non-contact action; matching the detected non-contact behavior with at least one standard model; and if the matching is successful, controlling the alarm clock of the electronic device according to an alarm clock control manner corresponding to the successfully matched standard model.

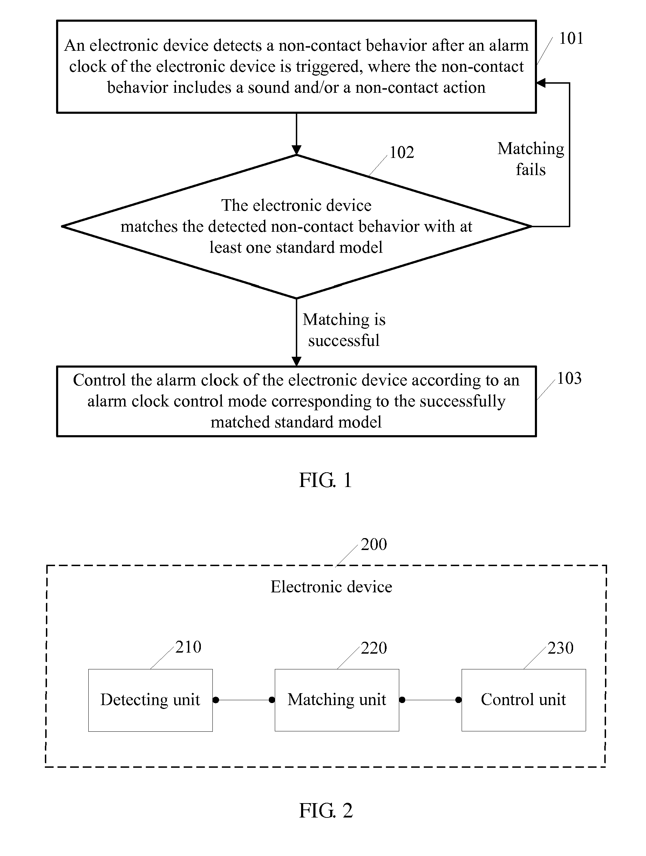

Referring to FIG. 1, an embodiment of the present invention provides a method for controlling an alarm clock of an electronic device, which may include the following content:

101. The electronic device detects a non-contact behavior after the alarm clock of the electronic device is triggered.

When the alarm clock of the electronic device is triggered, that is, an alarm time that is set arrives, an alarm clock program of the electronic device starts to execute an operation of reminding a user that the alarm time arrives, where the operation of reminding the user that the alarm time arrives may include at least one of the following operations: an operation of enabling the electronic device to ring, an operation of enabling the electronic device to vibrate, an operation of enabling the electronic device to bounce, an operation of enabling the electronic device to reshape, an operation of enabling the electronic device to emit light, an operation of enabling the electronic device to generate smoke, and other operations of reminding the user that the alarm time arrives.

The non-contact behavior includes a sound and/or a non-contact action. The non-contact action refers to an action not in contact with the electronic device, and may be an action gesture of the user or an action of a certain moving object (movement of the object may be triggered by the user, and certainly, may also be triggered by another case) or another living creature (such as a cat or a dog) that is within an area that may be detected.

In some embodiments of the present invention, if a camera is disposed on or connected to the electronic device, the electronic device may detect a motion trail of a moving object and the like by using the camera after the alarm clock of the electronic device is triggered; if a sound pickup apparatus is disposed on or connected to the electronic device, the electronic device may detect an ambient sound by using the sound pickup apparatus after the alarm clock of the electronic device is triggered; and if a distance sensor is disposed on or connected to the electronic device, the electronic device may detect a distance between, or a change status of a distance, or the like, between the moving object and the electronic device by using the distance sensor after the alarm clock of the electronic device is triggered. Certainly, if another apparatus capable of detecting a sound and/or a non-contact action is further disposed on or connected to the electronic device, the electronic device may further detect a sound and/or a non-contact action by using the another device.

It may be understood that if multiple apparatuses (such as a camera, a sound pickup apparatus, and a distance sensor) capable of detecting a non-contact behavior are disposed on or connected to the electronic device, a part of or all these apparatuses may be selected to detect a non-contact behavior. For example, a camera, a sound pickup apparatus, and a distance sensor are disposed on or connected to an electronic device, at least one of the camera, the sound pickup apparatus, and the distance sensor may be selected to detect a corresponding non-contact behavior.

The electronic device mentioned in this embodiment of the present invention may be, for example, a mobile phone, a tablet computer, or another electronic device having an alarm clock function, where a component such as a camera, a sound pickup apparatus, and a distance sensor may be disposed on or connected to the electronic device, and a component such as a touch sensing component (for example, a touchscreen) and a key may also be disposed on the electronic device.

102. The electronic device matches the detected non-contact behavior with at least one standard model.

103. If the matching is successful, control the alarm clock of the electronic device according to an alarm clock control manner corresponding to the successfully matched standard model.

In some embodiments of the present invention, the controlling the alarm clock of the electronic device may include: stopping the alarm clock of the electronic device, snoozing the alarm clock of the electronic device, adjusting a volume of the alarm clock of the electronic device, adjusting music of the alarm clock of the electronic device, or the like.

In addition, if the non-contact behavior detected by the electronic device does not successfully match any one of the standard models, the non-contact behavior detected this time may be ignored, and the electronic device may proceed to detect a non-contact behavior.

In some embodiments of the present invention, if the matching is successful, the electronic device may further adjust screen brightness (for example, increase or decrease the brightness) of the electronic device according to a screen brightness adjustment manner corresponding to a successfully matched standard model, and certainly, may also perform other operations.

In some embodiments of the present invention, if the matching fails (indicating that the alarm clock may fail to draw attention of the user or the user is not wakened up), the electronic device may further perform at least one of the following operations: sending a control instruction to at least one second electronic device (for example, a doorbell, an indoor fixed-line phone, an indoor television, or an indoor sound box), so as to control the second electronic device to work (for example, send a control instruction to control the doorbell to work, so that the doorbell rings; a sound of the doorbell is more likely to draw attention of the user or wake up the user; an objective of controlling another device to work is similar to this); gradually increasing a volume of the alarm clock to the maximum (normally, a higher volume of the alarm clock is more likely to draw attention of the user or wake up the user); if the electronic device is a communications terminal, selecting, by the electronic device, at least one telephone number to simulate an incoming call (simulating an incoming call is also more likely to draw attention of the user or wake up the user); and if the electronic device is a communications terminal, selecting, by the electronic device, at least one telephone number to make an outgoing call (an outgoing call to a target user may help to wake up the user).

In some embodiments of the present invention, the matching the detected non-contact behavior with at least one standard model may specifically include: matching a behavior parameter corresponding to the detected non-contact behavior with a standard behavior parameter corresponding to the at least one standard model, and if a preset rule is met between the behavior parameter corresponding to the detected non-contact behavior and a standard behavior parameter corresponding to one standard model of the at least one standard model, determining that the detected non-contact behavior successfully matches the one standard model. In addition, if the preset rule is not met between the behavior parameter corresponding to the detected non-contact behavior and the standard behavior parameter corresponding to any one standard model of the at least one standard model, it is determined that the detected non-contact behavior fails to match the any one standard model. For a different detected non-contact behavior or a different manner of detecting a non-contact behavior, a behavior parameter corresponding to the non-contact behavior may also be different, where the behavior parameter is all types of parameters that are related to the non-contact behavior. For example, if the electronic device detects the motion trail of the moving object by using the camera, a behavior parameter corresponding to the detected motion trail of the moving object may, for example, include at least one of the following behavior parameters: a motion direction corresponding to the motion trail, a pattern corresponding to the motion trail, a motion speed corresponding to the motion trail, a motion displacement corresponding to the motion trail, a motion duration corresponding to the motion trail, another related behavior parameter corresponding to the motion trail, and the like. For another example, if the electronic device detects the ambient sound by using the sound pickup apparatus, a behavior parameter corresponding to the detected sound may, for example, include at least one of the following behavior parameters: a volume value corresponding to the sound, an audio frequency value corresponding to the sound, an audio frequency change trend corresponding to the sound, a volume change trend corresponding to the sound, an audio frequency change rate corresponding to the sound, a volume change rate corresponding to the sound, a duration corresponding to the sound, a sound digital signal corresponding to the sound, another related behavior parameter corresponding to the sound, and the like. For still another example, if the distance sensor is used to detect the distance between, or the change status of the distance between the moving object and the electronic device, a behavior parameter corresponding to the detected distance between, or to the change status of the distance between the moving object and the electronic device may, for example, include at least one of the following behavior parameters: a distance between the moving object and the electronic device, a distance change rate between the moving object and the electronic device, a distance change duration between the moving object and the electronic device, a distance change trend between the moving object and the electronic device, another related behavior parameter corresponding to the distance change condition between the moving object and the electronic device, and the like. A behavior parameter corresponding to another non-contact behavior may be obtained by analogy, and details are not repeatedly described herein.

In an actual application, the electronic device may match the detected non-contact behavior with the at least one standard model by using multiple manners; for different detected non-contact behaviors, a manner of matching a standard model may also be different.

For example, if the camera is used to detect the motion trail of the moving object after the alarm clock of the electronic device is triggered, that the electronic device matches the behavior parameter corresponding to the detected non-contact behavior with the standard behavior parameter corresponding to the at least one standard model, and if the preset rule is met between the behavior parameter corresponding to the detected non-contact behavior and the standard behavior parameter corresponding to one standard model of the at least one standard model, determines that the detected non-contact behavior successfully matches the one standard model, may specifically include one or more of the following manners:

### Manner M 1

Determine a motion direction corresponding to the motion trail of the moving object, where the motion trail is detected by using the camera; match the determined motion direction with at least one first-type standard motion trail model; and if a difference between the determined motion direction and a standard motion direction that is corresponding to one standard motion trail model of the at least one first-type standard motion trail model is less than or equal to a threshold m1, determine that the detected motion trail successfully matches the one first-type standard motion trail model, where the threshold m1 may, for example, be set to 0%, 1%, 2%, 5%, 8%, 10%, 15%, or another value that is set according to a requirement.

### Manner M2

Determine a pattern corresponding to the motion trail of the moving object, where the motion trail is detected by using the camera; match the determined pattern with at least one second-type standard motion trail model; and if similarity between the determined pattern and a standard pattern that is corresponding to one standard motion trail model of the at least one second-type standard motion trail model is greater than or equal to a threshold m2, determine that the detected motion trail successfully matches the one second-type standard motion trail model, where the threshold m2 may, for example, be set to 80%, 90%, 95%, 100%, or another value that is set according to a requirement.

### Manner M3

Determine a motion speed corresponding to the motion trail of the moving object, where the motion trail is detected by using the camera; match the determined motion speed with at least one third-type standard motion trail model; and if a difference between the determined motion speed and a standard motion speed that is corresponding to one standard motion trail model of the at least one third-type standard motion trail model is less than or equal to a threshold m3, determine that the detected motion trail successfully matches the one third-type standard motion trail model, where the threshold m3 may, for example, be set to 0%, 1%, 2%, 5%, 8%, 10%, 15%, or another value that is set according to a requirement.

### Manner M4

Determine a motion speed corresponding to the motion trail of the moving object, where the motion trail is detected by using the camera; match the determined motion speed with one preconfigured third-type standard motion trail model; and if the determined motion speed is greater than, equal to, or less than a standard motion speed corresponding to the one preconfigured third-type standard motion trail model, determine that the detected motion trail successfully matches the one preconfigured third-type standard motion trail model.

### Manner M5

Determine a motion speed corresponding to the motion trail of the moving object, where the motion trail is detected by using the camera; match the determined motion speed with at least one fourth-type standard motion trail model; and if a difference between the determined motion speed and at least one standard motion speed that is within a standard motion speed range corresponding to one standard motion trail model of the at least one fourth-type standard motion trail model is less than or equal to a threshold m4, determine that the detected motion trail successfully matches the one fourth-type standard motion trail model, where the threshold m4 may, for example, be set to 0%, 1%, 2%, 5%, 8%, 10%, 15%, or another value that is set according to a requirement.

### Manner M6

Determine a motion speed corresponding to the motion trail of the moving object, where the motion trail is detected by using the camera; match the determined motion speed with one preconfigured fourth-type standard motion trail model; and if the determined motion speed is greater than, equal to, or less than at least one standard motion speed within a standard motion speed range corresponding to the one preconfigured fourth-type standard motion trail model, determine that the detected motion trail successfully matches the one preconfigured fourth-type standard motion trail model.

### Manner M7

Determine a motion displacement corresponding to the motion trail of the moving object, where the motion trail is detected by using the camera; match the determined motion displacement with at least one fifth-type standard motion trail model; and if a difference between the determined motion displacement and a standard motion displacement that is corresponding to one standard motion trail model of the at least one fifth-type standard motion trail model is less than or equal to a threshold m5, determine that the detected motion trail successfully matches the one fifth-type standard motion trail model, where the threshold m5 may, for example, be set to 0%, 1%, 2%, 5%, 8%, 10%, 15%, or another value that is set according to a requirement.

### Manner M8

Determine a motion displacement corresponding to the motion trail of the moving object, where the motion trail is detected by using the camera; match the determined motion displacement with one preconfigured fifth-type standard motion trail model; and if the determined motion displacement is greater than, less than, or equal to a standard motion displacement corresponding to the one preconfigured fifth-type standard motion trail model, determine that the detected motion trail successfully matches the one preconfigured fifth-type standard motion trail model.

### Manner M9

Determine a motion displacement corresponding to the motion trail of the moving object, where the motion trail is detected by using the camera; match the determined motion displacement with at least one sixth-type standard motion trail model; and if a difference between the determined motion displacement and at least one standard motion displacement that is within a standard motion displacement range corresponding to one standard motion trail model of the at least one sixth-type standard motion trail model is less than or equal to a threshold m6, determine that the detected motion trail successfully matches the one sixth-type standard motion trail model, where the threshold m6 may, for example, be set to 0%, 1%, 2%, 5%, 8%, 10%, 15%, or another value that is set according to a requirement.

### Manner M10

Determine a motion displacement corresponding to the motion trail of the moving object, where the motion trail is detected by using the camera; match the determined motion displacement with one preconfigured sixth-type standard motion trail model; and if the determined motion displacement is greater than, less than, or equal to at least one standard motion displacement within a standard motion displacement range corresponding to the one preconfigured sixth-type standard motion trail model, determine that the detected motion trail successfully matches the one preconfigured sixth-type standard motion trail model.

### Manner M11

Determine a motion duration corresponding to the motion trail of the moving object, where the motion trail is detected by using the camera; match the determined motion duration with at least one seventh-type standard motion trail model; and if a difference between the determined motion duration and a standard motion duration that is corresponding to one standard motion trail model of the at least one seventh-type standard motion trail model is less than or equal to a threshold m7, determine that the detected motion trail successfully matches the one seventh-type standard motion trail model, where the threshold m7 may, for example, be set to 0%, 1%, 2%, 5%, 8%, 10%, 15%, or another value that is set according to a requirement.

### Manner M 12

Determine a motion duration corresponding to the motion trail of the moving object, where the motion trail is detected by using the camera; match the determined motion duration with one preconfigured seventh-type standard motion trail model; and if the determined motion duration is greater than, less than, or equal to a standard motion duration corresponding to the one preconfigured seventh-type standard motion trail model, determine that the detected motion trail successfully matches the one preconfigured seventh-type standard motion trail model.

### Manner M 13

Determine a motion duration corresponding to the motion trail of the moving object, where the motion trail is detected by using the camera; match the determined motion duration with at least one eighth-type standard motion trail model; and if a difference between the determined motion duration and at least one standard motion duration that is within a standard motion duration range corresponding to one standard motion trail model of the at least one eighth-type standard motion trail model is less than or equal to a threshold m8, determine that the detected motion trail successfully matches the one eighth-type standard motion trail model, where the threshold m8 may, for example, be set to 0%, 1%, 2%, 5%, 8%, 10%, 15%, or another value that is set according to a requirement.

### Manner M 14

Determine a motion duration corresponding to the motion trail of the moving object, where the motion trail is detected by using the camera; match the determined motion duration with one preconfigured eighth-type standard motion trail model; and if the determined motion duration is greater than, less than, or equal to at least one standard motion duration within a standard motion duration range corresponding to the one preconfigured eighth-type standard motion trail model, determine that the detected motion trail successfully matches the one preconfigured eighth-type standard motion trail model.

For another example, if the sound pickup apparatus is used to detect the ambient sound after the alarm clock of the electronic device is triggered, that the electronic device matches the behavior parameter corresponding to the detected non-contact behavior with the standard behavior parameter corresponding to the at least one standard model, and if the preset rule is met between the behavior parameter corresponding to the detected non-contact behavior and the standard behavior parameter corresponding to one standard model of the at least one standard model, determines that the detected non-contact behavior successfully matches the one standard model, may specifically include one or more of the following manners:

### Manner N1

Acquire a volume value corresponding to the sound detected by using the sound pickup apparatus; match the acquired volume value with at least one first-type standard sound model; and if a difference between the acquired volume value and a standard volume value that is corresponding to one standard sound model of the at least one first-type standard sound model is less than or equal to a threshold n1, determine that the detected sound successfully matches the one first-type standard sound model, where the threshold n1 may, for example, be set to 0%, 2%, 5%, 10%, or another value that is set according to a requirement.

### Manner N2

Acquire a volume value corresponding to the sound detected by using the sound pickup apparatus; match the acquired volume value with one preconfigured first-type standard sound model; and if the acquired volume value is greater than, equal to, or less than a standard volume value corresponding to the one preconfigured first-type standard sound model, determine that the detected sound successfully matches the one preconfigured first-type standard sound model.

### Manner N3

Acquire a volume value corresponding to the sound detected by using the sound pickup apparatus; match the acquired volume value with at least one second-type standard sound model; and if a difference between the acquired volume value and at least one standard volume value that is within a standard volume value range corresponding to one standard sound model of the at least one second-type standard sound model is less than or equal to a threshold n2, determine that the detected sound successfully matches the one second-type standard sound model, where the threshold n2 may, for example, be set to 0%, 2%, 5%, 10%, or another value that is set according to a requirement.

### Manner N4

Acquire a volume value corresponding to the sound detected by using the sound pickup apparatus; match the acquired volume value with one preconfigured second-type standard sound model; and if the acquired volume value is greater than, equal to, or less than at least one standard volume value within a standard volume value range corresponding to the one preconfigured second-type standard sound model, determine that the detected sound successfully matches the one preconfigured second-type standard sound model.

### Manner N5

Acquire an audio frequency value corresponding to the sound detected by using the sound pickup apparatus; match the acquired audio frequency value with at least one third-type standard sound model; and if a difference between the acquired audio frequency value and a standard audio frequency value that is corresponding to one standard sound model of the at least one third-type standard sound model is less than or equal to a threshold n3, determine that the detected sound successfully matches the one third-type standard sound model, where the threshold n2 may, for example, be set to 0%, 1%, 2%, 5%, 10%, or another value that is set according to a requirement.

### Manner N6

Acquire an audio frequency value corresponding to the sound detected by using the sound pickup apparatus; match the acquired audio frequency value with one preconfigured third-type standard sound model; and if the acquired audio frequency value is greater than, equal to, or less than a standard audio frequency value corresponding to the one preconfigured third-type standard sound model, determine that the detected sound successfully matches the one preconfigured third-type standard sound model.

### Manner N7

Acquire an audio frequency value corresponding to the sound detected by using the sound pickup apparatus; match the acquired audio frequency value with at least one fourth-type standard sound model; and if a difference between the acquired audio frequency value and at least one standard audio frequency value that is within a standard audio frequency value range corresponding to one standard sound model of the at least one fourth-type standard sound model is less than or equal to a threshold n4, determine that the detected sound successfully matches the one fourth-type standard sound model, where the threshold n4 may, for example, be set to 0%, 1%, 2%, 5%, 10%, or another value that is set according to a requirement.

### Manner N8

Acquire an audio frequency value corresponding to the sound detected by using the sound pickup apparatus; match the acquired audio frequency value with one preconfigured fourth-type standard sound model; and if the acquired audio frequency value is greater than, equal to, or less than at least one standard audio frequency value within a standard audio frequency value range corresponding to the one preconfigured fourth-type standard sound model, determine that the detected sound successfully matches the one preconfigured fourth-type standard sound model.

### Manner N9

Acquire an audio frequency change trend corresponding to the sound detected by using the sound pickup apparatus; match the acquired audio frequency change trend with at least one fifth-type standard sound model; and if the acquired audio frequency change trend is the same as a standard audio frequency change trend corresponding to one standard sound model of the at least one fifth-type standard sound model, determine that the detected sound successfully matches the one fifth-type standard sound model.

### Manner N10

Acquire a volume change trend corresponding to the sound detected by using the sound pickup apparatus; match the acquired volume change trend with at least one sixth-type standard sound model; and if the acquired volume change trend is the same as a standard volume change trend corresponding to one standard sound model of the at least one sixth-type standard sound model, determine that the detected sound successfully matches the one sixth-type standard sound model.

### Manner N11

Acquire an audio frequency change rate corresponding to the sound detected by using the sound pickup apparatus; match the acquired audio frequency change rate with at least one seventh-type standard sound model; and if a difference between the acquired audio frequency change rate and a standard audio frequency change rate that is corresponding to one standard sound model of the at least one seventh-type standard sound model is less than or equal to a threshold n5, determine that the detected sound successfully matches the one seventh-type standard sound model, where the threshold n5 may, for example, be set to 0%, 1%, 2%, 5%, 10%, or another value that is set according to a requirement.

### Manner N12

Acquire an audio frequency change rate corresponding to the sound detected by using the sound pickup apparatus; match the acquired audio frequency change rate with one preconfigured seventh-type standard sound model; and if the acquired audio frequency change rate is greater than, equal to, or less than a standard audio frequency change rate corresponding to the one preconfigured seventh-type standard sound model, determine that the detected sound successfully matches the one preconfigured seventh-type standard sound model.

### Manner N13

Acquire an audio frequency change rate corresponding to the sound detected by using the sound pickup apparatus; match the acquired audio frequency change rate with at least one eighth-type standard sound model; and if a difference between the acquired audio frequency change rate and at least one audio frequency change rate that is within a standard audio frequency change rate range corresponding to one standard sound model of the at least one eighth-type standard sound model is less than or equal to a threshold n6, determine that the detected sound successfully matches the one eighth-type standard sound model, where the threshold n6 may, for example, be set to 0%, 1%, 2%, 5%, 10%, or another value that is set according to a requirement.

### Manner N14

Acquire an audio frequency change rate corresponding to the sound detected by using the sound pickup apparatus; match the acquired audio frequency change rate with one preconfigured eighth-type standard sound model; and if the acquired audio frequency change rate is greater than, equal to, or less than at least one standard audio frequency change rate within a standard audio frequency change rate range corresponding to the one preconfigured eighth-type standard sound model, determine that the detected sound successfully matches the one preconfigured eighth-type standard sound model.

### Manner N15

Acquire a volume change rate corresponding to the sound detected by using the sound pickup apparatus; match the acquired volume change rate with at least one ninth-type standard sound model; and if a difference between the acquired volume change rate and a standard volume change rate that is corresponding to one standard sound model of the at least one ninth-type standard sound model is less than or equal to a threshold n7, determine that the detected sound successfully matches the one ninth-type standard sound model, where the threshold n7 may, for example, be set to 0%, 1%, 2%, 5%, 10%, or another value that is set according to a requirement.

### Manner N16

Acquire a volume change rate corresponding to the sound detected by using the sound pickup apparatus; match the acquired volume change rate with one preconfigured ninth-type standard sound model; and if the acquired volume change rate is greater than, equal to, or less than a standard volume change rate corresponding to the one preconfigured ninth-type standard sound model, determine that the detected sound successfully matches the one preconfigured ninth-type standard sound model.

### Manner N17

Acquire a volume change rate corresponding to the sound detected by using the sound pickup apparatus; match the acquired volume change rate with at least one tenth-type standard sound model; and if a difference between the acquired volume change rate and at least one volume change rate that is within a standard volume change rate range corresponding to one standard sound model of the at least one tenth-type standard sound model is less than or equal to a threshold n8, determine that the detected sound successfully matches the one tenth-type standard sound model, where the threshold n8 may, for example, be set to 0%, 1%, 2%, 5%, 10%, or another value that is set according to a requirement.

### Manner N18

Acquire a volume change rate corresponding to the sound detected by using the sound pickup apparatus; match the acquired volume change rate with one preconfigured tenth-type standard sound model; and if the acquired volume change rate is greater than, equal to, or less than at least one standard volume change rate within a standard volume change rate range corresponding to the one preconfigured tenth-type standard sound model, determine that the detected sound successfully matches the one preconfigured tenth-type standard sound model.

### Manner N19

Acquire a duration corresponding to the sound detected by using the sound pickup apparatus; match the acquired duration with at least one eleventh-type standard sound model; and if a difference between the acquired duration and a standard duration that is corresponding to one standard sound model of the at least one eleventh-type standard sound model is less than or equal to a threshold n9, determine that the detected sound successfully matches the one eleventh-type standard sound model, where the threshold n9 may, for example, be set to 0%, 1%, 2%, 5%, 10%, or another value that is set according to a requirement.

### Manner N20

Acquire a duration corresponding to the sound detected by using the sound pickup apparatus; match the acquired duration with one preconfigured eleventh-type standard sound model; and if the acquired duration is greater than, equal to, or less than a standard duration corresponding to the one preconfigured eleventh-type standard sound model, determine that the detected sound successfully matches the one preconfigured eleventh-type standard sound model.

### Manner N21

Acquire a duration corresponding to the sound detected by using the sound pickup apparatus; match the acquired duration with at least one twelfth-type standard sound model; and if a difference between the acquired duration and at least one standard duration that is within a standard duration range corresponding to one standard sound model of the at least one twelfth-type standard sound model is less than or equal to a threshold n10, determine that the detected sound successfully matches the one twelfth-type standard sound model, where the threshold n10 may, for example, be set to 0%, 1%, 2%, 5%, 10%, or another value that is set according to a requirement.

### Manner N22

Acquire a duration corresponding to the sound detected by using the sound pickup apparatus; match the acquired duration with one preconfigured twelfth-type standard sound model; and if the acquired duration is greater than, equal to, or less than at least one standard duration within a standard duration range corresponding to the one preconfigured twelfth-type standard sound model, determine that the detected sound successfully matches the one preconfigured twelfth-type standard sound model.

### Manner N23

Convert the sound detected by using the sound pickup apparatus into a corresponding sound digital signal (a meaning corresponding to the sound digital signal, for example, includes "get up", "stop ringing", "wait for a moment", or the like); match the sound digital signal, which is obtained by means of conversion, with at least one thirteenth-type standard sound model; and if a difference between the sound digital signal and a standard sound digital signal that is corresponding to one standard sound model of the at least one thirteenth-type standard sound model is less than or equal to a threshold n11, determine that the detected sound successfully matches the one thirteenth-type standard sound model, where the threshold n4 may, for example, be set to 0%, 1%, 2%, 5%, or another value that is set according to a requirement.

For still another example, if the distance sensor is used to detect the distance between, or the change status of the distance between the moving object and the electronic device after the alarm clock of the electronic device is triggered, that the electronic device matches the behavior parameter corresponding to the detected non-contact behavior with the standard behavior parameter corresponding to the at least one standard model, and if the preset rule is met between the behavior parameter corresponding to the detected non-contact behavior and the standard behavior parameter corresponding to one standard model of the at least one standard model, determines that the detected non-contact behavior successfully matches the one standard model, may specifically include one or more of the following manners:

### Manner SS1

Match the distance between the moving object and the electronic device and at least one first-type standard distance model, where the distance is detected by using the distance sensor; and if a difference between the distance and a standard distance that is corresponding to one standard distance model of the at least one first-type standard distance model is less than or equal to a threshold s1, determine that the detected distance successfully matches the one first-type standard distance model, where the threshold s1 may, for example, be set to 0%, 1%, 2%, 5%, 10%, or another value that is set according to a requirement.

### Manner SS2

Match the distance between the moving object and the electronic device and one preconfigured first-type standard distance model, where the distance is detected by using the distance sensor; and if the distance is greater than, less than, or equal to a standard distance corresponding to the one preconfigured first-type standard distance model, determine that the detected distance successfully matches the one preconfigured first-type standard distance model.

### Manner SS3

Match the distance between the moving object and the electronic device and at least one first-type standard distance model, where the distance is detected by using the distance sensor; and if a difference between the distance and at least one standard distance that is within a standard distance range corresponding to one standard distance model of the at least one second-type standard distance model is less than or equal to a threshold s2, determine that the detected distance successfully matches the one second-type standard distance model, where the threshold s2 may, for example, be set to 0%, 1%, 2%, 5%, 10%, or another value that is set according to a requirement.

### Manner SS4

Match the distance between the moving object and the electronic device and one preconfigured second-type standard distance model, where the distance is detected by using the distance sensor; and if the distance is greater than, less than, or equal to at least one standard distance within a standard distance range corresponding to the one preconfigured second-type standard distance model, determine that the detected distance successfully matches the one preconfigured second-type standard distance model.

### Manner SS5

Match a distance change rate between the moving object and the electronic device and at least one third-type standard distance model, where the distance is detected by using the distance sensor; and if a difference between the distance change rate and a standard distance change rate that is corresponding to one standard distance model of the at least one third-type standard distance model is less than or equal to a threshold s3, determine that the detected distance change rate successfully matches the one third-type standard distance model, where the threshold s3 may, for example, be set to 0%, 1%, 2%, 5%, 10%, or another value that is set according to a requirement.

### Manner SS6

Match a distance change rate between the moving object and the electronic device and one preconfigured third-type standard distance model, where the distance is detected by using the distance sensor; and if the distance change rate is greater than, less than, or equal to a standard distance change rate corresponding to the one preconfigured third-type standard distance model, determine that the detected distance change rate successfully matches the one preconfigured third-type standard distance model.

### Manner SS7

Match a distance change rate between the moving object and the electronic device and at least one fourth-type standard distance model, where the distance is detected by using the distance sensor; and if a difference between the distance change rate and at least one standard distance change rate that is within a standard distance change rate range corresponding to one standard distance model of the at least one fourth-type standard distance model is less than or equal to a threshold s4, determine that the detected distance change rate successfully matches the one fourth-type standard distance model, where the threshold s4 may, for example, be set to 0%, 1%, 2%, 5%, 10%, or another value that is set according to a requirement.

### Manner SS8

Match a distance change rate between the moving object and the electronic device and one preconfigured fourth-type standard distance model, where the distance is detected by using the distance sensor; and if the distance change rate is greater than, less than, or equal to at least one standard distance change rate within a standard distance change rate range corresponding to the one preconfigured fourth-type standard distance model, determine that the detected distance change rate successfully matches the one preconfigured fourth-type standard distance model.

### Manner SS9

Match a distance change duration between the moving object and the electronic device and at least one fifth-type standard distance model, where the distance is detected by using the distance sensor; and if a difference between the distance change duration and a standard distance change duration that is corresponding to one standard distance model of the at least one fifth-type standard distance model is less than or equal to a threshold s5, determine that the detected distance change duration successfully matches the one fifth-type standard distance model, where the threshold s5 may, for example, be set to 0%, 1%, 2%, 5%, 10%, or another value that is set according to a requirement.

### Manner SS10

Match a distance change duration between the moving object and the electronic device and one preconfigured fifth-type standard distance model, where the distance is detected by using the distance sensor; and if the distance change duration is greater than, less than, or equal to a standard distance change duration corresponding to the one preconfigured fifth-type standard distance model, determine that the detected distance change duration successfully matches the one preconfigured fifth-type standard distance model.

### Manner SS11

Match a distance change duration between the moving object and the electronic device and at least one sixth-type standard distance model, where the distance is detected by using the distance sensor; and if a difference between the distance change duration and at least one standard distance change duration that is within a standard distance change duration range corresponding to one standard distance model of the at least one sixth-type standard distance model is less than or equal to a threshold s6, determine that the detected distance change duration successfully matches the one sixth-type standard distance model, where the threshold s6 may, for example, be set to 0%, 1%, 2%, 5%, 10%, or another value that is set according to a requirement.

### Manner SS 12

Match a distance change duration between the moving object and the electronic device and one preconfigured sixth-type standard distance model, where the distance is detected by using the distance sensor; and if the distance change duration is greater than, less than, or equal to at least one standard distance change duration within a standard distance change duration range corresponding to the one preconfigured sixth-type standard distance model, determine that the detected distance change duration successfully matches the one preconfigured sixth-type standard distance model.

### Manner SS13

Match a distance change trend between the moving object and the electronic device and at least one seventh-type standard distance model, where the distance is detected by using the distance sensor; and if the distance change trend is the same as a standard distance change trend corresponding to one standard distance model of the seventh-type standard distance model, determine that the detected distance change rate successfully matches the one seventh-type standard distance model.

It should be noted that the foregoing examples are described by using a matching process based on one matching manner as an example. Certainly, matching may also be performed by combining multiple matching manners. For example, the manner SS1 and the manner SS5 may be combined. Specifically, the distance that is between the moving object and the electronic device and is detected by using the distance sensor may be matched with the at least one eighth-type standard distance model; the distance change rate that is between the moving object and the electronic device and detected by using the distance sensor is matched with the at least one eighth-type standard distance model (in addition, the eighth-type standard distance model herein not only involves the standard distance but also involves the standard distance change rate); if the difference between the distance and the standard distance that is corresponding to one eighth-type standard distance model of the at least one eighth-type standard distance model is less than or equal to the threshold s1, and the difference between the distance change rate and the standard distance change rate that is corresponding to the one eighth-type standard distance model is less than or equal to the threshold s3, it may be determined that the foregoing detected distance and distance change rate successfully match the one eighth-type standard distance model; otherwise, it may be determined that the foregoing detected distance and distance change rate fail to match any one eighth-type standard distance model. For another example, the manner M1 and the manner SS1 may also be combined. Specifically, for example, the motion direction corresponding to the motion trail that is of the moving object and detected by using the camera may be determined, and the foregoing determined motion direction is matched with the at least one first-type standard model; and the distance that is between the moving object and the electronic device and detected by using the distance sensor is matched with the at least one first-type standard model (in addition, the first-type standard model herein not only involves the standard motion direction but also involves the standard distance); if the difference between the foregoing determined motion direction and the standard motion direction that is corresponding to one first-type standard model of the at least one first-type standard model is less than or equal to the threshold m1, and the difference between the distance and the standard distance that is corresponding to the one first-type standard model is less than or equal to the threshold s1, it may be determined that the foregoing motion direction and the detected distance successfully match the one first-type standard model; otherwise, it may be determined that the foregoing motion direction and the detected distance fail to match any one first-type standard model. Other combination manners are obtained by analogy, and details are not repeatedly described herein.

It may be understood that the foregoing examples are merely a part of possible implementation manners in which matching is performed based on a detection result of the camera, the distance sensor, or the sound pickup apparatus; and other possible implementation manners may be obtained by analogy, and details are not repeatedly described herein. Possible implementation manners in which corresponding matching is performed by using a detection result of another apparatus (for example, a biological thermal sensor or a breath sensor) for detecting a non-contact behavior may also be obtained by analogy, and details are not repeatedly described herein.

It can be seen from the above that, in this embodiment, a non-contact behavior is detected after an alarm clock of an electronic device is triggered, the detected non-contact behavior is matched with at least one standard model, and if the matching is successful, the alarm clock of the electronic device is controlled according to an alarm clock control manner corresponding to the successfully matched standard model. Because the alarm clock of the electronic device is controlled by using the non-contact behavior, the user may perform controlling, such as stopping or snoozing the alarm clock, without direct contact with the electronic device. This helps to simplify a user operation of controlling the alarm clock of the electronic device and may reduce eye irritation of the user, thereby improving user experience.

Further, multiple implementation manners according to this embodiment of the present invention may be selected flexibly, which helps to meet multiple requirements on, for example, flexibility of alarm clock control, accuracy of alarm clock control, and convenience of alarm clock control, in multiple application scenarios.

In order to better implement the technical solution according to the embodiment of the present invention, the following further provides a related electronic device for implementing the foregoing solution.

Referring to FIG. 2, an embodiment of the present invention provides an electronic device 200, which may include:
a detecting unit 210, a matching unit 220, and a control unit 230.

The detecting unit 210 is configured to detect a non-contact behavior after an alarm clock of the electronic device 200 is triggered, where the non-contact behavior includes a sound and/or a non-contact action.

The matching unit 220 is configured to match the non-contact behavior detected by the detecting unit 210 with at least one standard model.

The control unit 230 is configured to: if the matching unit 220 performs matching successfully, control the alarm clock of the electronic device 200 according to an alarm clock control manner corresponding to the successfully matched standard model.

In some embodiments of the present invention, the detecting unit 210 may be specifically configured to detect, after the alarm clock of the electronic device 200 is triggered, the non-contact behavior in at least one of the following manners: detecting a motion trail of a moving object by using a camera after the alarm clock of the electronic device 200 is triggered, detecting an ambient sound by using a sound pickup apparatus after the alarm clock of the electronic device 200 is triggered, and detecting a distance between, or a change status of a distance,or the like, between the moving object and the electronic device 200 by using a distance sensor after the alarm clock of the electronic device 200 is triggered.

In some embodiments of the present invention, the matching unit 220 may be specifically configured to match a behavior parameter corresponding to the non-contact behavior detected by the detecting unit 210 with a standard behavior parameter corresponding to the at least one standard model, and if a preset rule is met between the behavior parameter corresponding to the detected non-contact behavior and a standard behavior parameter corresponding to one standard model of the at least one standard model, determine that the detected non-contact behavior successfully matches the one standard model. In addition, if the preset rule is not met between the behavior parameter corresponding to the non-contact behavior detected by the detecting unit 210 and the standard behavior parameter corresponding to any one standard model of the at least one standard model, the matching unit 220 determines that the detected non-contact behavior fails to match the any one standard model.

In some embodiments of the present invention, if the detecting unit 210 detects the motion trail of the moving object by using the camera after the alarm clock of the electronic device 200 is triggered,
the matching unit 220 may be specifically configured to:
determine a motion direction corresponding to the motion trail of the moving object, where the motion trail is detected by using the camera; match the determined motion direction with at least one first-type standard motion trail model; and if a difference between the determined motion direction and a standard motion direction that is corresponding to one standard motion trail model of the at least one first-type standard motion trail model is less than or equal to a threshold m1, determine that the detected motion trail successfully matches the one first-type standard motion trail model; or
determine a pattern corresponding to the motion trail of the moving object, where the motion trail is detected by using the camera; match the determined pattern with at least one second-type standard motion trail model; and if similarity between the determined pattern and a standard pattern that is corresponding to one standard motion trail model of the at least one second-type standard motion trail model is greater than or equal to a threshold m2, determine that the detected motion trail successfully matches the one second-type standard motion trail model; or
determine a motion speed corresponding to the motion trail of the moving object, where the motion trail is detected by using the camera; match the determined motion speed with at least one third-type standard motion trail model; and if a difference between the determined motion speed and a standard motion speed that is corresponding to one standard motion trail model of the at least one third-type standard motion trail model is less than or equal to a threshold m3, determine that the detected motion trail successfully matches the one third-type standard motion trail model; or
determine a motion speed corresponding to the motion trail of the moving object, where the motion trail is detected by using the camera; match the determined motion speed with one preconfigured third-type standard motion trail model; and if the determined motion speed is greater than, equal to, or less than a standard motion speed corresponding to the one preconfigured third-type standard motion trail model, determine that the detected motion trail successfully matches the one preconfigured third-type standard motion trail model; or
determine a motion speed corresponding to the motion trail of the moving object, where the motion trail is detected by using the camera; match the determined motion speed with at least one fourth-type standard motion trail model; and if a difference between the determined motion speed and at least one standard motion speed that is within a standard motion speed range corresponding to one standard motion trail model of the at least one fourth-type standard motion trail model is less than or equal to a threshold m4, determine that the detected motion trail successfully matches the one fourth-type standard motion trail model; or
determine a motion speed corresponding to the motion trail of the moving object, where the motion trail is detected by using the camera; match the determined motion speed with one preconfigured fourth-type standard motion trail model; and if the determined motion speed is greater than, equal to, or less than at least one standard motion speed within a standard motion speed range corresponding to the one preconfigured fourth-type standard motion trail model, determine that the detected motion trail successfully matches the one preconfigured fourth-type standard motion trail model; or
determine a motion displacement corresponding to the motion trail of the moving object, where the motion trail is detected by using the camera; match the determined motion displacement with at least one fifth-type standard motion trail model; and if a difference between the determined motion displacement and a standard motion displacement that is corresponding to one standard motion trail model of the at least one fifth-type standard motion trail model is less than or equal to a threshold m5, determine that the detected motion trail successfully matches the one fifth-type standard motion trail model; or
determine a motion displacement corresponding to the motion trail of the moving object, where the motion trail is detected by using the camera; match the determined motion displacement with one preconfigured fifth-type standard motion trail model; and if the determined motion displacement is greater than, less than, or equal to a standard motion displacement corresponding to the one preconfigured fifth-type standard motion trail model, determine that the detected motion trail successfully matches the one preconfigured fifth-type standard motion trail model; or
determine a motion displacement corresponding to the motion trail of the moving object, where the motion trail is detected by using the camera; match the determined motion displacement with at least one sixth-type standard motion trail model; and if a difference between the determined motion displacement and at least one standard motion displacement that is within a standard motion displacement range corresponding to one standard motion trail model of the at least one sixth-type standard motion trail model is less than or equal to a threshold m6, determine that the detected motion trail successfully matches the one sixth-type standard motion trail model; or
determine a motion displacement corresponding to the motion trail of the moving object, where the motion trail is detected by using the camera; match the determined motion displacement with one preconfigured sixth-type standard motion trail model; and if the determined motion displacement is greater than, less than, or equal to at least one standard motion displacement within a standard motion displacement range corresponding to the one preconfigured sixth-type standard motion trail model, determine that the detected motion trail successfully matches the one preconfigured sixth-type standard motion trail model; or
determine a motion duration corresponding to the motion trail of the moving object, where the motion trail is detected by using the camera; match the determined motion duration with at least one seventh-type standard motion trail model; and if a difference between the determined motion duration and a standard motion duration that is corresponding to one standard motion trail model of the at least one seventh-type standard motion trail model is less than or equal to a threshold m7, determine that the detected motion trail successfully matches the one seventh-type standard motion trail model; or
determine a motion duration corresponding to the motion trail of the moving object, where the motion trail is detected by using the camera; match the determined motion duration with one preconfigured seventh-type standard motion trail model; and if the determined motion duration is greater than, less than, or equal to a standard motion duration corresponding to the one preconfigured seventh-type standard motion trail model, determine that the detected motion trail successfully matches the one preconfigured seventh-type standard motion trail model; or
determine a motion duration corresponding to the motion trail of the moving object, where the motion trail is detected by using the camera; match the determined motion duration with at least one eighth-type standard motion trail model; and if a difference between the determined motion duration and at least one standard motion duration that is within a standard motion duration range corresponding to one standard motion trail model of the at least one eighth-type standard motion trail model is less than or equal to a threshold m8, determine that the detected motion trail successfully matches the one eighth-type standard motion trail model; or
determine a motion duration corresponding to the motion trail of the moving object, where the motion trail is detected by using the camera; match the determined motion duration with one preconfigured eighth-type standard motion trail model; and if the determined motion duration is greater than, less than, or equal to at least one standard motion duration within a standard motion duration range corresponding to the one preconfigured eighth-type standard motion trail model, determine that the detected motion trail successfully matches the one preconfigured eighth-type standard motion trail model.

In some embodiments of the present invention, if the detecting unit 210 detects the ambient sound by using the sound pickup apparatus after the alarm clock of the electronic device 200 is triggered,
the matching unit 220 may be specifically configured to:
acquire a volume value corresponding to the sound detected by using the sound pickup apparatus; match the acquired volume value with at least one first-type standard sound model; and if a difference between the acquired volume value and a standard volume value that is corresponding to one standard sound model of the at least one first-type standard sound model is less than or equal to a threshold n1, determine that the detected sound successfully matches the one first-type standard sound model; or
acquire a volume value corresponding to the sound detected by using the sound pickup apparatus; match the acquired volume value with one preconfigured first-type standard sound model; and if the acquired volume value is greater than, equal to, or less than a standard volume value corresponding to the one preconfigured first-type standard sound model, determine that the detected sound successfully matches the one preconfigured first-type standard sound model; or
acquire a volume value corresponding to the sound detected by using the sound pickup apparatus; match the acquired volume value with at least one second-type standard sound model; and if a difference between the acquired volume value and at least one standard volume value that is within a standard volume value range corresponding to one standard sound model of the at least one second-type standard sound model is less than or equal to a threshold n2, determine that the detected sound successfully matches the one second-type standard sound model; or
acquire a volume value corresponding to the sound detected by using the sound pickup apparatus; match the acquired volume value with one preconfigured second-type standard sound model; and if the acquired volume value is greater than, equal to, or less than at least one standard volume value within a standard volume value range corresponding to the one preconfigured second-type standard sound model, determine that the detected sound successfully matches the one preconfigured second-type standard sound model; or
acquire an audio frequency value corresponding to the sound detected by using the sound pickup apparatus; match the acquired audio frequency value with at least one third-type standard sound model; and if a difference between the acquired audio frequency value and a standard audio frequency value that is corresponding to one standard sound model of the at least one third-type standard sound model is less than or equal to a threshold n3, determine that the detected sound successfully matches the one third-type standard sound model; or
acquire an audio frequency value corresponding to the sound detected by using the sound pickup apparatus; match the acquired audio frequency value with one preconfigured third-type standard sound model; and if the acquired audio frequency value is greater than, equal to, or less than a standard audio frequency value corresponding to the one preconfigured third-type standard sound model, determine that the detected sound successfully matches the one preconfigured third-type standard sound model; or
acquire an audio frequency value corresponding to the sound detected by using the sound pickup apparatus; match the acquired audio frequency value with at least one fourth-type standard sound model; and if a difference between the acquired audio frequency value and at least one standard audio frequency value that is within a standard audio frequency value range corresponding to one standard sound model of the at least one fourth-type standard sound model is less than or equal to a threshold n4, determine that the detected sound successfully matches the one fourth-type standard sound model; or
acquire an audio frequency value corresponding to the sound detected by using the sound pickup apparatus; match the acquired audio frequency value with one preconfigured fourth-type standard sound model; and if the acquired audio frequency value is greater than, equal to, or less than at least one standard audio frequency value within a standard audio frequency value range corresponding to the one preconfigured fourth-type standard sound model, determine that the detected sound successfully matches the one preconfigured fourth-type standard sound model; or
acquire an audio frequency change trend corresponding to the sound detected by using the sound pickup apparatus; match the acquired audio frequency change trend with at least one fifth-type standard sound model; and if the acquired audio frequency change trend is the same as a standard audio frequency change trend corresponding to one standard sound model of the at least one fifth-type standard sound model, determine that the detected sound successfully matches the one fifth-type standard sound model; or
acquire a volume change trend corresponding to the sound detected by using the sound pickup apparatus; match the acquired volume change trend with at least one sixth-type standard sound model; and if the acquired volume change trend is the same as a standard volume change trend corresponding to one standard sound model of the at least one sixth-type standard sound model, determine that the detected sound successfully matches the one sixth-type standard sound model; or
acquire an audio frequency change rate corresponding to the sound detected by using the sound pickup apparatus; match the acquired audio frequency change rate with at least one seventh-type standard sound model; and if a difference between the acquired audio frequency change rate and a standard audio frequency change rate that is corresponding to one standard sound model of the at least one seventh-type standard sound model is less than or equal to a threshold n5, determine that the detected sound successfully matches the one seventh-type standard sound model; or
acquire an audio frequency change rate corresponding to the sound detected by using the sound pickup apparatus; match the acquired audio frequency change rate with one preconfigured seventh-type standard sound model; and if the acquired audio frequency change rate is greater than, equal to, or less than a standard audio frequency change rate corresponding to the one preconfigured seventh-type standard sound model, determine that the detected sound successfully matches the one preconfigured seventh-type standard sound model; or
acquire an audio frequency change rate corresponding to the sound detected by using the sound pickup apparatus; match the acquired audio frequency change rate with at least one eighth-type standard sound model; and if a difference between the acquired audio frequency change rate and at least one audio frequency change rate that is within a standard audio frequency change rate range corresponding to one standard sound model of the at least one eighth-type standard sound model is less than or equal to a threshold n6, determine that the detected sound successfully matches the one eighth-type standard sound model; or
acquire an audio frequency change rate corresponding to the sound detected by using the sound pickup apparatus; match the acquired audio frequency change rate with one preconfigured eighth-type standard sound model; and if the acquired audio frequency change rate is greater than, equal to, or less than at least one standard audio frequency change rate within a standard audio frequency change rate range corresponding to the one preconfigured eighth-type standard sound model, determine that the detected sound successfully matches the one preconfigured eighth-type standard sound model; or
acquire a volume change rate corresponding to the sound detected by using the sound pickup apparatus; match the acquired volume change rate with at least one ninth-type standard sound model; and if a difference between the acquired volume change rate and a standard volume change rate that is corresponding to one standard sound model of the at least one ninth-type standard sound model is less than or equal to a threshold n7, determine that the detected sound successfully matches the one ninth-type standard sound model; or
acquire a volume change rate corresponding to the sound detected by using the sound pickup apparatus; match the acquired volume change rate with one preconfigured ninth-type standard sound model; and if the acquired volume change rate is greater than, equal to, or less than a standard volume change rate corresponding to the one preconfigured ninth-type standard sound model, determine that the detected sound successfully matches the one preconfigured ninth-type standard sound model; or
acquire a volume change rate corresponding to the sound detected by using the sound pickup apparatus; match the acquired volume change rate with at least one tenth-type standard sound model; and if a difference between the acquired volume change rate and at least one volume change rate that is within a standard volume change rate range corresponding to one standard sound model of the at least one tenth-type standard sound model is less than or equal to a threshold n8, determine that the detected sound successfully matches the one tenth-type standard sound model; or
acquire a volume change rate corresponding to the sound detected by using the sound pickup apparatus; match the acquired volume change rate with one preconfigured tenth-type standard sound model; and if the acquired volume change rate is greater than, equal to, or less than at least one standard volume change rate within a standard volume change rate range corresponding to the one preconfigured tenth-type standard sound model, determine that the detected sound successfully matches the one preconfigured tenth-type standard sound model; or
acquire a duration corresponding to the sound detected by using the sound pickup apparatus; match the acquired duration with at least one eleventh-type standard sound model; and if a difference between the acquired duration and a standard duration that is corresponding to one standard sound model of the at least one eleventh-type standard sound model is less than or equal to a threshold n9, determine that the detected sound successfully matches the one eleventh-type standard sound model; or
acquire a duration corresponding to the sound detected by using the sound pickup apparatus; match the acquired duration with one preconfigured eleventh-type standard sound model; and if the acquired duration is greater than, equal to, or less than a standard duration corresponding to the one preconfigured eleventh-type standard sound model, determine that the detected sound successfully matches the one preconfigured eleventh-type standard sound model; or
acquire a duration corresponding to the sound detected by using the sound pickup apparatus; match the acquired duration with at least one twelfth-type standard sound model; and if a difference between the acquired duration and at least one standard duration that is within a standard duration range corresponding to one standard sound model of the at least one twelfth-type standard sound model is less than or equal to a threshold n10, determine that the detected sound successfully matches the one twelfth-type standard sound model; or
acquire a duration corresponding to the sound detected by using the sound pickup apparatus; match the acquired duration with one preconfigured twelfth-type standard sound model; and if the acquired duration is greater than, equal to, or less than at least one standard duration within a standard duration range corresponding to the one preconfigured twelfth-type standard sound model, determine that the detected sound successfully matches the one preconfigured twelfth-type standard sound model; or
convert the sound detected by using the sound pickup apparatus into a corresponding sound digital signal; match the sound digital signal, which is obtained by means of conversion, with at least one thirteenth-type standard sound model; and if a difference between the sound digital signal and a standard sound digital signal that is corresponding to one standard sound model of the at least one thirteenth-type standard sound model is less than or equal to a threshold n11, determine that the detected sound successfully matches the one thirteenth-type standard sound model.

In some embodiments of the present invention, if the detecting unit 210 detects the distance between, or the change status of the distance between the moving object and the electronic device 200 by using the distance sensor after the alarm clock of the electronic device 200 is triggered,
the matching unit 220 may be specifically configured to:
match the distance between the moving object and the electronic device 200 and at least one first-type standard distance model, where the distance is detected by using the distance sensor; and if a difference between the distance and a standard distance that is corresponding to one standard distance model of the at least one first-type standard distance model is less than or equal to a threshold s1, determine that the detected distance successfully matches the one first-type standard distance model; or
match the distance between the moving object and the electronic device 200 and one preconfigured first-type standard distance model, where the distance is detected by using the distance sensor; and if the distance is greater than, less than, or equal to a standard distance corresponding to the one preconfigured first-type standard distance model, determine that the detected distance successfully matches the one preconfigured first-type standard distance model; or
match the distance between the moving object and the electronic device 200 and at least one first-type standard distance model, where the distance is detected by using the distance sensor; and if a difference between the distance and at least one standard distance that is within a standard distance range corresponding to one standard distance model of the at least one second-type standard distance model is less than or equal to a threshold s2, determine that the detected distance successfully matches the one second-type standard distance model; or
match the distance between the moving object and the electronic device 200 and one preconfigured second-type standard distance model, where the distance is detected by using the distance sensor; and if the distance is greater than, less than, or equal to at least one standard distance within a standard distance range corresponding to the one preconfigured second-type standard distance model, determine that the detected distance successfully matches the one preconfigured second-type standard distance model; or
match a distance change rate between the moving object and the electronic device 200 and at least one third-type standard distance model, where the distance is detected by using the distance sensor; and if a difference between the distance change rate and a standard distance change rate that is corresponding to one standard distance model of the at least one third-type standard distance model is less than or equal to a threshold s3, determine that the detected distance change rate successfully matches the one third-type standard distance model; or
match a distance change rate between the moving object and the electronic device 200 and one preconfigured third-type standard distance model, where the distance is detected by using the distance sensor; and if the distance change rate is greater than, less than, or equal to a standard distance change rate corresponding to the one preconfigured third-type standard distance model, determine that the detected distance change rate successfully matches the one preconfigured third-type standard distance model; or
match a distance change rate between the moving object and the electronic device 200 and at least one fourth-type standard distance model, where the distance is detected by using the distance sensor; and if a difference between the distance change rate and at least one standard distance change rate that is within a standard distance change rate range corresponding to one standard distance model of the at least one fourth-type standard distance model is less than or equal to a threshold s4, determine that the detected distance change rate successfully matches the one fourth-type standard distance model; or
match a distance change rate between the moving object and the electronic device 200 and one preconfigured fourth-type standard distance model, where the distance is detected by using the distance sensor; and if the distance change rate is greater than, less than, or equal to at least one standard distance change rate within a standard distance change rate range corresponding to the one preconfigured fourth-type standard distance model, determine that the detected distance change rate successfully matches the one preconfigured fourth-type standard distance model; or
match a distance change duration between the moving object and the electronic device 200 and at least one fifth-type standard distance model, where the distance is detected by using the distance sensor; and if a difference between the distance change duration and a standard distance change duration that is corresponding to one standard distance model of the at least one fifth-type standard distance model is less than or equal to a threshold s5, determine that the detected distance change duration successfully matches the one fifth-type standard distance model; or
match a distance change duration between the moving object and the electronic device 200 and one preconfigured fifth-type standard distance model, where the distance is detected by using the distance sensor; and if the distance change duration is greater than, less than, or equal to a standard distance change duration corresponding to the one preconfigured fifth-type standard distance model, determine that the detected distance change duration successfully matches the one preconfigured fifth-type standard distance model; or
match a distance change duration between the moving object and the electronic device 200 and at least one sixth-type standard distance model, where the distance is detected by using the distance sensor; and if a difference between the distance change duration and at least one standard distance change duration that is within a standard distance change duration range corresponding to one standard distance model of the at least one sixth-type standard distance model is less than or equal to a threshold s6, determine that the detected distance change duration successfully matches the one sixth-type standard distance model; or
match a distance change duration between the moving object and the electronic device 200 and one preconfigured sixth-type standard distance model, where the distance is detected by using the distance sensor; and if the distance change duration is greater than, less than, or equal to at least one standard distance change duration within a standard distance change duration range corresponding to the one preconfigured sixth-type standard distance model, determine that the detected distance change duration successfully matches the one preconfigured sixth-type standard distance model; or
match a distance change trend between the moving object and the electronic device 200 and at least one seventh-type standard distance model, where the distance is detected by using the distance sensor; and if the distance change trend is the same as a standard distance change trend corresponding to one standard distance model of the seventh-type standard distance model, determine that the detected distance change rate successfully matches the one seventh-type standard distance model.

In some embodiments of the present invention, that the control unit 230 controls the alarm clock of the electronic device 200 may include: stopping the alarm clock of the electronic device 200, snoozing the alarm clock of the electronic device 200, adjusting a volume of the alarm clock of the electronic device 200, adjusting music of the alarm clock of the electronic device 200, or the like.

In addition, if the non-contact behavior detected by the detecting unit 210 does not successfully match any one of the standard models, the control unit 230 may ignore the non-contact behavior detected this time, and the detecting unit 210 may proceed to detect a non-contact behavior.

In some embodiments of the present invention, if the matching performed by the matching unit 220 is successful, the control unit 230 may further adjust screen brightness of the electronic device (for example, increase or decrease the brightness) according to a screen brightness adjustment manner corresponding to a successfully matched standard model, and certainly, may also perform other operations.

In some embodiments of the present invention, if the matching performed by the matching unit 220 fails (indicating that the alarm clock may fail to draw attention of the user or the user is not wakened up), the control unit 230 may further perform at least one of the following operations: sending a control instruction to at least one second electronic device (for example, a doorbell, an indoor fixed-line phone, an indoor television, or an indoor sound box), so as to control the second electronic device to work (for example, send a control instruction to control the doorbell to work, so that the doorbell rings; a sound of the doorbell is more likely to draw attention of the user or wake up the user; an objective of controlling another device to work is similar to this); gradually increasing a volume of the alarm clock to the maximum (normally, a higher volume of the alarm clock is more likely to draw attention of the user or wake up the user); if the electronic device 200 is a communications terminal, selecting, by the control unit 230, at least one telephone number to simulate an incoming call (simulating an incoming call is also more likely to draw attention of the user or wake up the user); and if the electronic device 200 is a communications terminal, selecting, by the control unit 230, at least one telephone number to make an outgoing call (an outgoing call to a target user may help to wake up the user).

It may be understood that the electronic device 200 according to this embodiment may be the electronic device in the foregoing method embodiment, where a function of each functional module of the electronic device 200 may be specifically implemented according to the method in the foregoing method embodiment. For a specific implementation process thereof, reference may be made to a related description in the foregoing method embodiment, which is not repeatedly described herein.

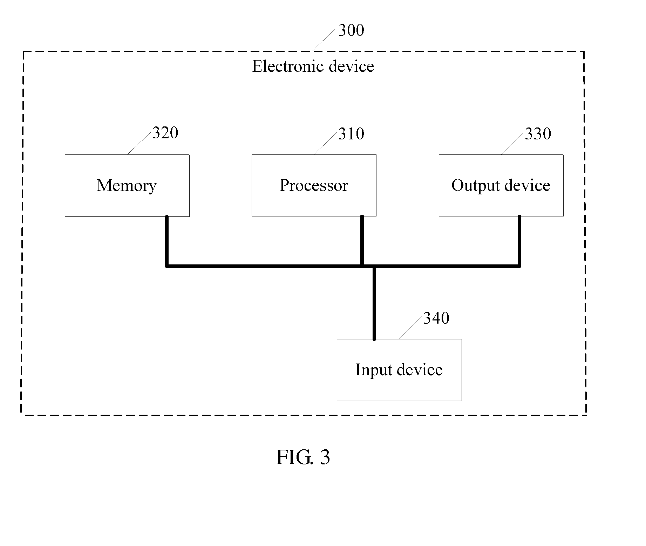

Referring to FIG. 3, an embodiment of the present invention further provides an electronic device 300, which may include:
a processor 310, a memory 320, an output device 330, and an input device 340, where the processor 310, the memory 320, the input device 340, and the output device 330 may be connected by using a bus or be connected in another manner (an example that the connection is made by using a bus is used in FIG. 3).

The processor 310 performs the following steps: detecting a non-contact behavior after an alarm clock of the electronic device 300 is triggered, where the non-contact behavior includes a sound and/or a non-contact action; matching the detected non-contact behavior with at least one standard model; and if the matching is successful, controlling the alarm clock of the electronic device 300 according to an alarm clock control manner corresponding to the successfully matched standard model.

In some embodiments of the present invention, the processor 310 may detect, after the alarm clock of the electronic device 300 is triggered, the non-contact behavior in at least one of the following manners: detecting a motion trail of a moving object by using a camera after the alarm clock of the electronic device 300 is triggered, detecting an ambient sound by using a sound pickup apparatus after the alarm clock of the electronic device 300 is triggered, and detecting a distance between, or a change status of a distance between the moving object and the electronic device 300 by using a distance sensor after the alarm clock of the electronic device 300 is triggered.

In some embodiments of the present invention, that the processor 310 matches the detected non-contact behavior with at least one standard model may include: matching a behavior parameter corresponding to the detected non-contact behavior with a standard behavior parameter corresponding to the at least one standard model, and if a preset rule is met between the behavior parameter corresponding to the detected non-contact behavior and a standard behavior parameter corresponding to one standard model of the at least one standard model, determining that the detected non-contact behavior successfully matches the one standard model. In addition, if the preset rule is not met between the behavior parameter corresponding to the detected non-contact behavior and the standard behavior parameter corresponding to any one standard model of the at least one standard model, the processor 310 may determine that the detected non-contact behavior fails to match the any one standard model.

In some embodiments of the present invention, if the processor 310 detects the motion trail of the moving object by using the camera after the alarm clock of the electronic device 300 is triggered, that the processor 310 matches the behavior parameter corresponding to the detected non-contact behavior with the standard behavior parameter corresponding to the at least one standard model, and if the preset rule is met between the behavior parameter corresponding to the detected non-contact behavior and the standard behavior parameter corresponding to one standard model of the at least one standard model, determines that the detected non-contact behavior successfully matches the one standard model, may specifically include:
determining a motion direction corresponding to the motion trail of the moving object, where the motion trail is detected by using the camera; matching the determined motion direction with at least one first-type standard motion trail model; and if a difference between the determined motion direction and a standard motion direction that is corresponding to one standard motion trail model of the at least one first-type standard motion trail model is less than or equal to a threshold m1, determining that the detected motion trail successfully matches the one first-type standard motion trail model; or
determining a pattern corresponding to the motion trail of the moving object, where the motion trail is detected by using the camera; matching the determined pattern with at least one second-type standard motion trail model; and if similarity between the determined pattern and a standard pattern that is corresponding to one standard motion trail model of the at least one second-type standard motion trail model is greater than or equal to a threshold m2, determining that the detected motion trail successfully matches the one second-type standard motion trail model; or
determining a motion speed corresponding to the motion trail of the moving object, where the motion trail is detected by using the camera; matching the determined motion speed with at least one third-type standard motion trail model; and if a difference between the determined motion speed and a standard motion speed that is corresponding to one standard motion trail model of the at least one third-type standard motion trail model is less than or equal to a threshold m3, determining that the detected motion trail successfully matches the one third-type standard motion trail model; or
determining a motion speed corresponding to the motion trail of the moving object, where the motion trail is detected by using the camera; matching the determined motion speed with one preconfigured third-type standard motion trail model; and if the determined motion speed is greater than, equal to, or less than a standard motion speed corresponding to the one preconfigured third-type standard motion trail model, determining that the detected motion trail successfully matches the one preconfigured third-type standard motion trail model; or
determining a motion speed corresponding to the motion trail of the moving object, where the motion trail is detected by using the camera; matching the determined motion speed with at least one fourth-type standard motion trail model; and if a difference between the determined motion speed and at least one standard motion speed that is within a standard motion speed range corresponding to one standard motion trail model of the at least one fourth-type standard motion trail model is less than or equal to a threshold m4, determining that the detected motion trail successfully matches the one fourth-type standard motion trail model; or
determining a motion speed corresponding to the motion trail of the moving object, where the motion trail is detected by using the camera; matching the determined motion speed with one preconfigured fourth-type standard motion trail model; and if the determined motion speed is greater than, equal to, or less than at least one standard motion speed within a standard motion speed range corresponding to the one preconfigured fourth-type standard motion trail model, determining that the detected motion trail successfully matches the one preconfigured fourth-type standard motion trail model; or
determining a motion displacement corresponding to the motion trail of the moving object, where the motion trail is detected by using the camera; matching the determined motion displacement with at least one fifth-type standard motion trail model; and if a difference between the determined motion displacement and a standard motion displacement that is corresponding to one standard motion trail model of the at least one fifth-type standard motion trail model is less than or equal to a threshold m5, determining that the detected motion trail successfully matches the one fifth-type standard motion trail model; or
determining a motion displacement corresponding to the motion trail of the moving object, where the motion trail is detected by using the camera; matching the determined motion displacement with one preconfigured fifth-type standard motion trail model; and if the determined motion displacement is greater than, less than, or equal to a standard motion displacement corresponding to the one preconfigured fifth-type standard motion trail model, determining that the detected motion trail successfully matches the one preconfigured fifth-type standard motion trail model; or
determining a motion displacement corresponding to the motion trail of the moving object, where the motion trail is detected by using the camera; matching the determined motion displacement with at least one sixth-type standard motion trail model; and if a difference between the determined motion displacement and at least one standard motion displacement that is within a standard motion displacement range corresponding to one standard motion trail model of the at least one sixth-type standard motion trail model is less than or equal to a threshold m6, determining that the detected motion trail successfully matches the one sixth-type standard motion trail model; or
determining a motion displacement corresponding to the motion trail of the moving object, where the motion trail is detected by using the camera; matching the determined motion displacement with one preconfigured sixth-type standard motion trail model; and if the determined motion displacement is greater than, less than, or equal to at least one standard motion displacement within a standard motion displacement range corresponding to the one preconfigured sixth-type standard motion trail model, determining that the detected motion trail successfully matches the one preconfigured sixth-type standard motion trail model; or
determining a motion duration corresponding to the motion trail of the moving object, where the motion trail is detected by using the camera; matching the determined motion duration with at least one seventh-type standard motion trail model; and if a difference between the determined motion duration and a standard motion duration that is corresponding to one standard motion trail model of the at least one seventh-type standard motion trail model is less than or equal to a threshold m7, determining that the detected motion trail successfully matches the one seventh-type standard motion trail model; or
determining a motion duration corresponding to the motion trail of the moving object, where the motion trail is detected by using the camera; matching the determined motion duration with one preconfigured seventh-type standard motion trail model; and if the determined motion duration is greater than, less than, or equal to a standard motion duration corresponding to the one preconfigured seventh-type standard motion trail model, determining that the detected motion trail successfully matches the one preconfigured seventh-type standard motion trail model; or
determining a motion duration corresponding to the motion trail of the moving object, where the motion trail is detected by using the camera; matching the determined motion duration with at least one eighth-type standard motion trail model; and if a difference between the determined motion duration and at least one standard motion duration that is within a standard motion duration range corresponding to one standard motion trail model of the at least one eighth-type standard motion trail model is less than or equal to a threshold m8, determining that the detected motion trail successfully matches the one eighth-type standard motion trail model; or
determining a motion duration corresponding to the motion trail of the moving object, where the motion trail is detected by using the camera; matching the determined motion duration with one preconfigured eighth-type standard motion trail model; and if the determined motion duration is greater than, less than, or equal to at least one standard motion duration within a standard motion duration range corresponding to the one preconfigured eighth-type standard motion trail model, determining that the detected motion trail successfully matches the one preconfigured eighth-type standard motion trail model.

In some embodiments of the present invention, if the processor 310 detects the ambient sound by using the sound pickup apparatus after the alarm clock of the electronic device 300 is triggered, that the processor 310 matches the behavior parameter corresponding to the detected non-contact behavior with the standard behavior parameter corresponding to the at least one standard model, and if the preset rule is met between the behavior parameter corresponding to the detected non-contact behavior and the standard behavior parameter corresponding to one standard model of the at least one standard model, determines that the detected non-contact behavior successfully matches the one standard model, may specifically include:
acquiring a volume value corresponding to the sound detected by using the sound pickup apparatus; matching the acquired volume value with at least one first-type standard sound model; and if a difference between the acquired volume value and a standard volume value that is corresponding to one standard sound model of the at least one first-type standard sound model is less than or equal to a threshold n1, determining that the detected sound successfully matches the one first-type standard sound model; or
acquiring a volume value corresponding to the sound detected by using the sound pickup apparatus; matching the acquired volume value with one preconfigured first-type standard sound model; and if the acquired volume value is greater than, equal to, or less than a standard volume value corresponding to the one preconfigured first-type standard sound model, determining that the detected sound successfully matches the one preconfigured first-type standard sound model; or
acquiring a volume value corresponding to the sound detected by using the sound pickup apparatus; matching the acquired volume value with at least one second-type standard sound model; and if a difference between the acquired volume value and at least one standard volume value that is within a standard volume value range corresponding to one standard sound model of the at least one second-type standard sound model is less than or equal to a threshold n2, determining that the detected sound successfully matches the one second-type standard sound model; or
acquiring a volume value corresponding to the sound detected by using the sound pickup apparatus; matching the acquired volume value with one preconfigured second-type standard sound model; and if the acquired volume value is greater than, equal to, or less than at least one standard volume value within a standard volume value range corresponding to the one preconfigured second-type standard sound model, determining that the detected sound successfully matches the one preconfigured second-type standard sound model; or
acquiring an audio frequency value corresponding to the sound detected by using the sound pickup apparatus; matching the acquired audio frequency value with at least one third-type standard sound model; and if a difference between the acquired audio frequency value and a standard audio frequency value that is corresponding to one standard sound model of the at least one third-type standard sound model is less than or equal to a threshold n3, determining that the detected sound successfully matches the one third-type standard sound model; or
acquiring an audio frequency value corresponding to the sound detected by using the sound pickup apparatus; matching the acquired audio frequency value with one preconfigured third-type standard sound model; and if the acquired audio frequency value is greater than, equal to, or less than a standard audio frequency value corresponding to the one preconfigured third-type standard sound model, determining that the detected sound successfully matches the one preconfigured third-type standard sound model; or
acquiring an audio frequency value corresponding to the sound detected by using the sound pickup apparatus; matching the acquired audio frequency value with at least one fourth-type standard sound model; and if a difference between the acquired audio frequency value and at least one standard audio frequency value that is within a standard audio frequency value range corresponding to one standard sound model of the at least one fourth-type standard sound model is less than or equal to a threshold n4, determining that the detected sound successfully matches the one fourth-type standard sound model; or
acquiring an audio frequency value corresponding to the sound detected by using the sound pickup apparatus; matching the acquired audio frequency value with one preconfigured fourth-type standard sound model; and if the acquired audio frequency value is greater than, equal to, or less than at least one standard audio frequency value within a standard audio frequency value range corresponding to the one preconfigured fourth-type standard sound model, determining that the detected sound successfully matches the one preconfigured fourth-type standard sound model; or
acquiring an audio frequency change trend corresponding to the sound detected by using the sound pickup apparatus; matching the acquired audio frequency change trend with at least one fifth-type standard sound model; and if the acquired audio frequency change trend is the same as a standard audio frequency change trend corresponding to one standard sound model of the at least one fifth-type standard sound model, determining that the detected sound successfully matches the one fifth-type standard sound model; or
acquiring a volume change trend corresponding to the sound detected by using the sound pickup apparatus; matching the acquired volume change trend with at least one sixth-type standard sound model; and if the acquired volume change trend is the same as a standard volume change trend corresponding to one standard sound model of the at least one sixth-type standard sound model, determining that the detected sound successfully matches the one sixth-type standard sound model; or
acquiring an audio frequency change rate corresponding to the sound detected by using the sound pickup apparatus; matching the acquired audio frequency change rate with at least one seventh-type standard sound model; and if a difference between the acquired audio frequency change rate and a standard audio frequency change rate that is corresponding to one standard sound model of the at least one seventh-type standard sound model is less than or equal to a threshold n5, determining that the detected sound successfully matches the one seventh-type standard sound model; or
acquiring an audio frequency change rate corresponding to the sound detected by using the sound pickup apparatus; matching the acquired audio frequency change rate with one preconfigured seventh-type standard sound model; and if the acquired audio frequency change rate is greater than, equal to, or less than a standard audio frequency change rate corresponding to the one preconfigured seventh-type standard sound model, determining that the detected sound successfully matches the one preconfigured seventh-type standard sound model; or
acquiring an audio frequency change rate corresponding to the sound detected by using the sound pickup apparatus; matching the acquired audio frequency change rate with at least one eighth-type standard sound model; and if a difference between the acquired audio frequency change rate and at least one audio frequency change rate that is within a standard audio frequency change rate range corresponding to one standard sound model of the at least one eighth-type standard sound model is less than or equal to a threshold n6, determining that the detected sound successfully matches the one eighth-type standard sound model; or
acquiring an audio frequency change rate corresponding to the sound detected by using the sound pickup apparatus; matching the acquired audio frequency change rate with one preconfigured eighth-type standard sound model; and if the acquired audio frequency change rate is greater than, equal to, or less than at least one standard audio frequency change rate within a standard audio frequency change rate range corresponding to the one preconfigured eighth-type standard sound model, determining that the detected sound successfully matches the one preconfigured eighth-type standard sound model; or
acquiring a volume change rate corresponding to the sound detected by using the sound pickup apparatus; matching the acquired volume change rate with at least one ninth-type standard sound model; and if a difference between the acquired volume change rate and a standard volume change rate that is corresponding to one standard sound model of the at least one ninth-type standard sound model is less than or equal to a threshold n7, determining that the detected sound successfully matches the one ninth-type standard sound model; or
acquiring a volume change rate corresponding to the sound detected by using the sound pickup apparatus; matching the acquired volume change rate with one preconfigured ninth-type standard sound model; and if the acquired volume change rate is greater than, equal to, or less than a standard volume change rate corresponding to the one preconfigured ninth-type standard sound model, determining that the detected sound successfully matches the one preconfigured ninth-type standard sound model; or
acquiring a volume change rate corresponding to the sound detected by using the sound pickup apparatus; matching the acquired volume change rate with at least one tenth-type standard sound model; and if a difference between the acquired volume change rate and at least one volume change rate that is within a standard volume change rate range corresponding to one standard sound model of the at least one tenth-type standard sound model is less than or equal to a threshold n8, determining that the detected sound successfully matches the one tenth-type standard sound model; or
acquiring a volume change rate corresponding to the sound detected by using the sound pickup apparatus; matching the acquired volume change rate with one preconfigured tenth-type standard sound model; and if the acquired volume change rate is greater than, equal to, or less than at least one standard volume change rate within a standard volume change rate range corresponding to the one preconfigured tenth-type standard sound model, determining that the detected sound successfully matches the one preconfigured tenth-type standard sound model; or
acquiring a duration corresponding to the sound detected by using the sound pickup apparatus; matching the acquired duration with at least one eleventh-type standard sound model; and if a difference between the acquired duration and a standard duration that is corresponding to one standard sound model of the at least one eleventh-type standard sound model is less than or equal to a threshold n9, determining that the detected sound successfully matches the one eleventh-type standard sound model; or
acquiring a duration corresponding to the sound detected by using the sound pickup apparatus; matching the acquired duration with one preconfigured eleventh-type standard sound model; and if the acquired duration is greater than, equal to, or less than a standard duration corresponding to the one preconfigured eleventh-type standard sound model, determining that the detected sound successfully matches the one preconfigured eleventh-type standard sound model; or
acquiring a duration corresponding to the sound detected by using the sound pickup apparatus; matching the acquired duration with at least one twelfth-type standard sound model; and if a difference between the acquired duration and at least one standard duration that is within a standard duration range corresponding to one standard sound model of the at least one twelfth-type standard sound model is less than or equal to a threshold n10, determining that the detected sound successfully matches the one twelfth-type standard sound model; or
acquiring a duration corresponding to the sound detected by using the sound pickup apparatus; matching the acquired duration with one preconfigured twelfth-type standard sound model; and if the acquired duration is greater than, equal to, or less than at least one standard duration within a standard duration range corresponding to the one preconfigured twelfth-type standard sound model, determining that the detected sound successfully matches the one preconfigured twelfth-type standard sound model; or
converting the sound detected by using the sound pickup apparatus into a corresponding sound digital signal; matching the sound digital signal, which is obtained by means of conversion, with at least one thirteenth-type standard sound model; and if a difference between the sound digital signal and a standard sound digital signal that is corresponding to one standard sound model of the at least one thirteenth-type standard sound model is less than or equal to a threshold n11, determining that the detected sound successfully matches the one thirteenth-type standard sound model.

In some embodiments of the present invention, if the processor 310 detects the distance between, or the change status of the distance between the moving object and the electronic device 300 by using the distance sensor after the alarm clock of the electronic device 300 is triggered, that the processor 310 matches the behavior parameter corresponding to the detected non-contact behavior with the standard behavior parameter corresponding to the at least one standard model, and if the preset rule is met between the behavior parameter corresponding to the detected non-contact behavior and the standard behavior parameter corresponding to one standard model of the at least one standard model, determines that the detected non-contact behavior successfully matches the one standard model, may specifically include:
matching the distance between the moving object and the electronic device 300 and at least one first-type standard distance model, where the distance is detected by using the distance sensor; and if a difference between the distance and a standard distance that is corresponding to one standard distance model of the at least one first-type standard distance model is less than or equal to a threshold s1, determining that the detected distance successfully matches the one first-type standard distance model; or
matching the distance between the moving object and the electronic device 300 and one preconfigured first-type standard distance model, where the distance is detected by using the distance sensor; and if the distance is greater than, less than, or equal to a standard distance corresponding to the one preconfigured first-type standard distance model, determining that the detected distance successfully matches the one preconfigured first-type standard distance model; or
matching the distance between the moving object and the electronic device 300 and at least one first-type standard distance model, where the distance is detected by using the distance sensor; and if a difference between the distance and at least one standard distance that is within a standard distance range corresponding to one standard distance model of the at least one second-type standard distance model is less than or equal to a threshold s2, determining that the detected distance successfully matches the one second-type standard distance model; or
matching the distance between the moving object and the electronic device 300 and one preconfigured second-type standard distance model, where the distance is detected by using the distance sensor; and if the distance is greater than, less than, or equal to at least one standard distance within a standard distance range corresponding to the one preconfigured second-type standard distance model, determining that the detected distance successfully matches the one preconfigured second-type standard distance model; or
matching a distance change rate between the moving object and the electronic device 300 and at least one third-type standard distance model, where the distance is detected by using the distance sensor; and if a difference between the distance change rate and a standard distance change rate that is corresponding to one standard distance model of the at least one third-type standard distance model is less than or equal to a threshold s3, determining that the detected distance change rate successfully matches the one third-type standard distance model; or
matching a distance change rate between the moving object and the electronic device 300 and one preconfigured third-type standard distance model, where the distance is detected by using the distance sensor; and if the distance change rate is greater than, less than, or equal to a standard distance change rate corresponding to the one preconfigured third-type standard distance model, determining that the detected distance change rate successfully matches the one preconfigured third-type standard distance model; or
matching a distance change rate between the moving object and the electronic device 300 and at least one fourth-type standard distance model, where the distance is detected by using the distance sensor; and if a difference between the distance change rate and at least one standard distance change rate that is within a standard distance change rate range corresponding to one standard distance model of the at least one fourth-type standard distance model is less than or equal to a threshold s4, determining that the detected distance change rate successfully matches the one fourth-type standard distance model; or
matching a distance change rate between the moving object and the electronic device 300 and one preconfigured fourth-type standard distance model, where the distance is detected by using the distance sensor; and if the distance change rate is greater than, less than, or equal to at least one standard distance change rate within a standard distance change rate range corresponding to the one preconfigured fourth-type standard distance model, determining that the detected distance change rate successfully matches the one preconfigured fourth-type standard distance model; or
matching a distance change duration between the moving object and the electronic device 300 and at least one fifth-type standard distance model, where the distance is detected by using the distance sensor; and if a difference between the distance change duration and a standard distance change duration that is corresponding to one standard distance model of the at least one fifth-type standard distance model is less than or equal to a threshold s5, determining that the detected distance change duration successfully matches the one fifth-type standard distance model; or
matching a distance change duration between the moving object and the electronic device 300 and one preconfigured fifth-type standard distance model, where the distance is detected by using the distance sensor; and if the distance change duration is greater than, less than, or equal to a standard distance change duration corresponding to the one preconfigured fifth-type standard distance model, determining that the detected distance change duration successfully matches the one preconfigured fifth-type standard distance model; or
matching a distance change duration between the moving object and the electronic device 300 and at least one sixth-type standard distance model, where the distance is detected by using the distance sensor; and if a difference between the distance change duration and at least one standard distance change duration that is within a standard distance change duration range corresponding to one standard distance model of the at least one sixth-type standard distance model is less than or equal to a threshold s6, determining that the detected distance change duration successfully matches the one sixth-type standard distance model; or
matching a distance change duration between the moving object and the electronic device 300 and one preconfigured sixth-type standard distance model, where the distance is detected by using the distance sensor; and if the distance change duration is greater than, less than, or equal to at least one standard distance change duration within a standard distance change duration range corresponding to the one preconfigured sixth-type standard distance model, determining that the detected distance change duration successfully matches the one preconfigured sixth-type standard distance model; or
matching a distance change trend between the moving object and the electronic device 300 and at least one seventh-type standard distance model, where the distance is detected by using the distance sensor; and if the distance change trend is the same as a standard distance change trend corresponding to one standard distance model of the seventh-type standard distance model, determining that the detected distance change rate successfully matches the one seventh-type standard distance model.

In some embodiments of the present invention, that the control unit 230 controls the alarm clock of the electronic device 300 may include: stopping the alarm clock of the electronic device 300, snoozing the alarm clock of the electronic device 300, adjusting a volume of the alarm clock of the electronic device 300, adjusting music of the alarm clock of the electronic device 300, or the like.

In addition, if the non-contact behavior detected by the processor 310 does not successfully match any one of the standard models, the processor 310 may ignore the non-contact behavior detected this time, and the processor 310 may proceed to detect a non-contact behavior.

In some embodiments of the present invention, if the matching performed by the processor 310 is successful, the processor 310 may further adjust screen brightness of the electronic device (for example, increase or decrease the brightness) according to a screen brightness adjustment manner corresponding to a successfully matched standard model, and certainly, may also perform other operations.

In some embodiments of the present invention, if the matching performed by the processor 310 fails (indicating that the alarm clock may fail to draw attention of the user or the user is not wakened up), the processor 310 may further perform at least one of the following operations: sending a control instruction to at least one second electronic device (for example, a doorbell, an indoor fixed-line phone, an indoor television, or an indoor sound box), so as to control the second electronic device to work (for example, send a control instruction to control the doorbell to work, so that the doorbell rings; a sound of the doorbell is more likely to draw attention of the user or wake up the user; an objective of controlling another device to work is similar to this); gradually increasing a volume of the alarm clock to the maximum (normally, a higher volume of the alarm clock is more likely to draw attention of the user or wake up the user); if the electronic device 300 is a communications terminal, selecting, by the processor 310, at least one telephone number to simulate an incoming call (simulating an incoming call is also more likely to draw attention of the user or wake up the user); and if the electronic device 300 is a communications terminal, selecting, by the processor 310, at least one telephone number to make an outgoing call (an outgoing call to a target user may help to wake up the user).

It may be understood that the electronic device 300 according to this embodiment may be the electronic device in the foregoing method embodiment, where a function of each functional module of the electronic device 300 may be specifically implemented according to the method in the foregoing method embodiment. For a specific implementation process thereof, reference may be made to a related description in the foregoing method embodiment, which is not repeatedly described herein.

This embodiment of the present invention further provides a computer storage medium, where the computer storage medium may store a program. When the program runs, a part of or all steps of the method, which is recorded in the foregoing method embodiments, for controlling an alarm clock of an electronic device are included.

It should be noted that, for ease of description, the foregoing method embodiments are described as a series of action combinations; however, a person skilled in the art should understand that the present invention may not be limited by the described sequence of actions, because some steps may be performed in another sequence or simultaneously according to the present invention. It should be further understood by a person skilled in the art that the described embodiments all belong to exemplary embodiments, and the involved actions and modules are not necessarily required by the present invention. In the foregoing embodiments, the embodiments emphasize different aspects, and the part not described in detail in a certain embodiment may be referred to relevant description of other embodiments.

To sum up, in the embodiments of the present invention, a non-contact behavior is detected after an alarm clock of an electronic device is triggered, and the electronic device matches the detected non-contact behavior with at least one standard model, and if the matching is successful, controls the alarm clock of the electronic device according to an alarm clock control manner corresponding to the successfully matched standard model. Because the alarm clock of the electronic device is controlled by using the non-contact behavior, the user may perform controlling, such as stopping or snoozing the alarm clock, without direct contact with the electronic device. This helps to simplify a user operation of controlling the alarm clock of the electronic device and may reduce eye irritation of the user, thereby improving user experience.

Further, multiple implementation manners according to this embodiment of the present invention may be selected flexibly, which helps to meet multiple requirements on, for example, flexibility of alarm clock control, accuracy of alarm clock control, and convenience of alarm clock control, in multiple application scenarios.

A person of ordinary skill in the art may understand that all or a part of the steps of the methods in the embodiments may be implemented by a program instructing relevant hardware. The program may be stored in a computer readable storage medium. The storage medium may include, for example, a read-only memory, a random-access memory, a magnetic disk, or an optical disc.

The above describes in detail a method for controlling an alarm clock of an electronic device and the electronic device according to embodiments of the present invention. Specific examples are used in this specification to describe principles and implementation manners of the present invention. The foregoing embodiments are merely intended to help understand the method and core ideas of the present invention. In addition, for a person of ordinary skill in the art, modifications may be made to the specific implementation manners and the application scope based on the ideas of the present invention. In conclusion, the content of the specification shall not be construed as a limitation on the present invention.

## Claims

1. A method for controlling an alarm clock of an electronic device, comprising:
detecting a non-contact behavior after the alarm clock of the electronic device is triggered, wherein:
the non-contact behavior comprises a sound and/or a non-contact action; and
matching the detected non-contact behavior with at least one standard model; and if the matching is successful, controlling the alarm clock of the electronic device according to an alarm clock control manner corresponding to the successfully matched standard model.

2. The method according to claim 1, wherein the matching the detected non-contact behavior with at least one standard model comprises: matching a behavior parameter corresponding to the detected non-contact behavior with a standard behavior parameter corresponding to the at least one standard model, and if a preset rule is met between the behavior parameter corresponding to the detected non-contact behavior and a standard behavior parameter corresponding to one standard model of the at least one standard model, determining that the detected non-contact behavior successfully matches the one standard model.

3. The method according to claim 1 or 2, wherein the detecting a non-contact behavior after the alarm clock of the electronic device is triggered comprises at least one of the following manners: detecting a motion trail of a moving object by using a camera after the alarm clock of the electronic device is triggered, detecting an ambient sound by using a sound pickup apparatus after the alarm clock of the electronic device is triggered, and detecting a distance between, or a change status of a distance between the moving object and the electronic device by using a distance sensor after the alarm clock of the electronic device is triggered.

4. The method according to claim 3, wherein if the camera is used to detect the motion trail of the moving object after the alarm clock of the electronic device is triggered, the matching a behavior parameter corresponding to the detected non-contact behavior with a standard behavior parameter corresponding to the at least one standard model, and if a preset rule is met between the behavior parameter corresponding to the detected non-contact behavior and a standard behavior parameter corresponding to one standard model of the at least one standard model, determining that the detected non-contact behavior successfully matches the one standard model comprises:
determining a motion direction corresponding to the motion trail of the moving object, wherein the motion trail is detected by using the camera; matching the determined motion direction with at least one first-type standard motion trail model; and if a difference between the determined motion direction and a standard motion direction that is corresponding to one standard motion trail model of the at least one first-type standard motion trail model is less than or equal to a threshold m1, determining that the detected motion trail successfully matches the one first-type standard motion trail model;
alternatively,
determining a pattern corresponding to the motion trail of the moving object, wherein the motion trail is detected by using the camera; matching the determined pattern with at least one second-type standard motion trail model; and if similarity between the determined pattern and a standard pattern that is corresponding to one standard motion trail model of the at least one second-type standard motion trail model is greater than or equal to a threshold m2, determining that the detected motion trail successfully matches the one second-type standard motion trail model;
alternatively,
determining a motion speed corresponding to the motion trail of the moving object, wherein the motion trail is detected by using the camera; matching the determined motion speed with at least one third-type standard motion trail model; and if a difference between the determined motion speed and a standard motion speed that is corresponding to one standard motion trail model of the at least one third-type standard motion trail model is less than or equal to a threshold m3, determining that the detected motion trail successfully matches the one third-type standard motion trail model;
alternatively,
determining a motion speed corresponding to the motion trail of the moving object, wherein the motion trail is detected by using the camera; matching the determined motion speed with one preconfigured third-type standard motion trail model; and if the determined motion speed is greater than, equal to, or less than a standard motion speed corresponding to the one preconfigured third-type standard motion trail model, determining that the detected motion trail successfully matches the one preconfigured third-type standard motion trail model;
alternatively,
determining a motion speed corresponding to the motion trail of the moving object, wherein the motion trail is detected by using the camera; matching the determined motion speed with at least one fourth-type standard motion trail model; and if a difference between the determined motion speed and at least one standard motion speed that is within a standard motion speed range corresponding to one standard motion trail model of the at least one fourth-type standard motion trail model is less than or equal to a threshold m4, determining that the detected motion trail successfully matches the one fourth-type standard motion trail model;
alternatively,
determining a motion speed corresponding to the motion trail of the moving object, wherein the motion trail is detected by using the camera; matching the determined motion speed with one preconfigured fourth-type standard motion trail model; and if the determined motion speed is greater than, equal to, or less than at least one standard motion speed within a standard motion speed range corresponding to the one preconfigured fourth-type standard motion trail model, determining that the detected motion trail successfully matches the one preconfigured fourth-type standard motion trail model;
alternatively,
determining a motion displacement corresponding to the motion trail of the moving object, wherein the motion trail is detected by using the camera; matching the determined motion displacement with at least one fifth-type standard motion trail model; and if a difference between the determined motion displacement and a standard motion displacement that is corresponding to one standard motion trail model of the at least one fifth-type standard motion trail model is less than or equal to a threshold m5, determining that the detected motion trail successfully matches the one fifth-type standard motion trail model;
alternatively,
determining a motion displacement corresponding to the motion trail of the moving object, wherein the motion trail is detected by using the camera; matching the determined motion displacement with one preconfigured fifth-type standard motion trail model; and if the determined motion displacement is greater than, less than, or equal to a standard motion displacement corresponding to the one preconfigured fifth-type standard motion trail model, determining that the detected motion trail successfully matches the one preconfigured fifth-type standard motion trail model;
alternatively,
determining a motion displacement corresponding to the motion trail of the moving object, wherein the motion trail is detected by using the camera; matching the determined motion displacement with at least one sixth-type standard motion trail model; and if a difference between the determined motion displacement and at least one standard motion displacement that is within a standard motion displacement range corresponding to one standard motion trail model of the at least one sixth-type standard motion trail model is less than or equal to a threshold m6, determining that the detected motion trail successfully matches the one sixth-type standard motion trail model;
alternatively,
determining a motion displacement corresponding to the motion trail of the moving object, wherein the motion trail is detected by using the camera; matching the determined motion displacement with one preconfigured sixth-type standard motion trail model; and if the determined motion displacement is greater than, less than, or equal to at least one standard motion displacement within a standard motion displacement range corresponding to the one preconfigured sixth-type standard motion trail model, determining that the detected motion trail successfully matches the one preconfigured sixth-type standard motion trail model;
alternatively,
determining a motion duration corresponding to the motion trail of the moving object, wherein the motion trail is detected by using the camera; matching the determined motion duration with at least one seventh-type standard motion trail model; and if a difference between the determined motion duration and a standard motion duration that is corresponding to one standard motion trail model of the at least one seventh-type standard motion trail model is less than or equal to a threshold m7, determining that the detected motion trail successfully matches the one seventh-type standard motion trail model;
alternatively,
determining a motion duration corresponding to the motion trail of the moving object, wherein the motion trail is detected by using the camera; matching the determined motion duration with one preconfigured seventh-type standard motion trail model; and if the determined motion duration is greater than, less than, or equal to a standard motion duration corresponding to the one preconfigured seventh-type standard motion trail model, determining that the detected motion trail successfully matches the one preconfigured seventh-type standard motion trail model;
alternatively,
determining a motion duration corresponding to the motion trail of the moving object, wherein the motion trail is detected by using the camera; matching the determined motion duration with at least one eighth-type standard motion trail model; and if a difference between the determined motion duration and at least one standard motion duration that is within a standard motion duration range corresponding to one standard motion trail model of the at least one eighth-type standard motion trail model is less than or equal to a threshold m8, determining that the detected motion trail successfully matches the one eighth-type standard motion trail model;
alternatively,
determining a motion duration corresponding to the motion trail of the moving object, wherein the motion trail is detected by using the camera; matching the determined motion duration with one preconfigured eighth-type standard motion trail model; and if the determined motion duration is greater than, less than, or equal to at least one standard motion duration within a standard motion duration range corresponding to the one preconfigured eighth-type standard motion trail model, determining that the detected motion trail successfully matches the one preconfigured eighth-type standard motion trail model.

5. The method according to claim 3, wherein if the sound pickup apparatus is used to detect the ambient sound after the alarm clock of the electronic device is triggered, the matching a behavior parameter corresponding to the detected non-contact behavior with a standard behavior parameter corresponding to the at least one standard model, and if a preset rule is met between the behavior parameter corresponding to the detected non-contact behavior and a standard behavior parameter corresponding to one standard model of the at least one standard model, determining that the detected non-contact behavior successfully matches the one standard model comprises:
acquiring a volume value corresponding to the sound detected by using the sound pickup apparatus; matching the acquired volume value with at least one first-type standard sound model; and if a difference between the acquired volume value and a standard volume value that is corresponding to one standard sound model of the at least one first-type standard sound model is less than or equal to a threshold n1, determining that the detected sound successfully matches the one first-type standard sound model;
alternatively,
acquiring a volume value corresponding to the sound detected by using the sound pickup apparatus; matching the acquired volume value with one preconfigured first-type standard sound model; and if the acquired volume value is greater than, equal to, or less than a standard volume value corresponding to the one preconfigured first-type standard sound model, determining that the detected sound successfully matches the one preconfigured first-type standard sound model;
alternatively,
acquiring a volume value corresponding to the sound detected by using the sound pickup apparatus; matching the acquired volume value with at least one second-type standard sound model; and if a difference between the acquired volume value and at least one standard volume value that is within a standard volume value range corresponding to one standard sound model of the at least one second-type standard sound model is less than or equal to a threshold n2, determining that the detected sound successfully matches the one second-type standard sound model;
alternatively,
acquiring a volume value corresponding to the sound detected by using the sound pickup apparatus; matching the acquired volume value with one preconfigured second-type standard sound model; and if the acquired volume value is greater than, equal to, or less than at least one standard volume value within a standard volume value range corresponding to the one preconfigured second-type standard sound model, determining that the detected sound successfully matches the one preconfigured second-type standard sound model;
alternatively,
acquiring an audio frequency value corresponding to the sound detected by using the sound pickup apparatus; matching the acquired audio frequency value with at least one third-type standard sound model; and if a difference between the acquired audio frequency value and a standard audio frequency value that is corresponding to one standard sound model of the at least one third-type standard sound model is less than or equal to a threshold n3, determining that the detected sound successfully matches the one third-type standard sound model;
alternatively,
acquiring an audio frequency value corresponding to the sound detected by using the sound pickup apparatus; matching the acquired audio frequency value with one preconfigured third-type standard sound model; and if the acquired audio frequency value is greater than, equal to, or less than a standard audio frequency value corresponding to the one preconfigured third-type standard sound model, determining that the detected sound successfully matches the one preconfigured third-type standard sound model;
alternatively,
acquiring an audio frequency value corresponding to the sound detected by using the sound pickup apparatus; matching the acquired audio frequency value with at least one fourth-type standard sound model; and if a difference between the acquired audio frequency value and at least one standard audio frequency value that is within a standard audio frequency value range corresponding to one standard sound model of the at least one fourth-type standard sound model is less than or equal to a threshold n4, determining that the detected sound successfully matches the one fourth-type standard sound model;
alternatively,
acquiring an audio frequency value corresponding to the sound detected by using the sound pickup apparatus; matching the acquired audio frequency value with one preconfigured fourth-type standard sound model; and if the acquired audio frequency value is greater than, equal to, or less than at least one standard audio frequency value within a standard audio frequency value range corresponding to the one preconfigured fourth-type standard sound model, determining that the detected sound successfully matches the one preconfigured fourth-type standard sound model;
alternatively,
acquiring an audio frequency change trend corresponding to the sound detected by using the sound pickup apparatus; matching the acquired audio frequency change trend with at least one fifth-type standard sound model; and if the acquired audio frequency change trend is the same as a standard audio frequency change trend corresponding to one standard sound model of the at least one fifth-type standard sound model, determining that the detected sound successfully matches the one fifth-type standard sound model;
alternatively,
acquiring a volume change trend corresponding to the sound detected by using the sound pickup apparatus; matching the acquired volume change trend with at least one sixth-type standard sound model; and if the acquired volume change trend is the same as a standard volume change trend corresponding to one standard sound model of the at least one sixth-type standard sound model, determining that the detected sound successfully matches the one sixth-type standard sound model;
alternatively,
acquiring an audio frequency change rate corresponding to the sound detected by using the sound pickup apparatus; matching the acquired audio frequency change rate with at least one seventh-type standard sound model; and if a difference between the acquired audio frequency change rate and a standard audio frequency change rate that is corresponding to one standard sound model of the at least one seventh-type standard sound model is less than or equal to a threshold n5, determining that the detected sound successfully matches the one seventh-type standard sound model;
alternatively,
acquiring an audio frequency change rate corresponding to the sound detected by using the sound pickup apparatus; matching the acquired audio frequency change rate with one preconfigured seventh-type standard sound model; and if the acquired audio frequency change rate is greater than, equal to, or less than a standard audio frequency change rate corresponding to the one preconfigured seventh-type standard sound model, determining that the detected sound successfully matches the one preconfigured seventh-type standard sound model;
alternatively,
acquiring an audio frequency change rate corresponding to the sound detected by using the sound pickup apparatus; matching the acquired audio frequency change rate with at least one eighth-type standard sound model; and if a difference between the acquired audio frequency change rate and at least one audio frequency change rate that is within a standard audio frequency change rate range corresponding to one standard sound model of the at least one eighth-type standard sound model is less than or equal to a threshold n6, determining that the detected sound successfully matches the one eighth-type standard sound model;
alternatively,
acquiring an audio frequency change rate corresponding to the sound detected by using the sound pickup apparatus; matching the acquired audio frequency change rate with one preconfigured eighth-type standard sound model; and if the acquired audio frequency change rate is greater than, equal to, or less than at least one standard audio frequency change rate within a standard audio frequency change rate range corresponding to the one preconfigured eighth-type standard sound model, determining that the detected sound successfully matches the one preconfigured eighth-type standard sound model;
alternatively,
acquiring a volume change rate corresponding to the sound detected by using the sound pickup apparatus; matching the acquired volume change rate with at least one ninth-type standard sound model; and if a difference between the acquired volume change rate and a standard volume change rate that is corresponding to one standard sound model of the at least one ninth-type standard sound model is less than or equal to a threshold n7, determining that the detected sound successfully matches the one ninth-type standard sound model;
alternatively,
acquiring a volume change rate corresponding to the sound detected by using the sound pickup apparatus; matching the acquired volume change rate with one preconfigured ninth-type standard sound model; and if the acquired volume change rate is greater than, equal to, or less than a standard volume change rate corresponding to the one preconfigured ninth-type standard sound model, determining that the detected sound successfully matches the one preconfigured ninth-type standard sound model;
alternatively,
acquiring a volume change rate corresponding to the sound detected by using the sound pickup apparatus; matching the acquired volume change rate with at least one tenth-type standard sound model; and if a difference between the acquired volume change rate and at least one volume change rate that is within a standard volume change rate range corresponding to one standard sound model of the at least one tenth-type standard sound model is less than or equal to a threshold n8, determining that the detected sound successfully matches the one tenth-type standard sound model;
alternatively,
acquiring a volume change rate corresponding to the sound detected by using the sound pickup apparatus; matching the acquired volume change rate with one preconfigured tenth-type standard sound model; and if the acquired volume change rate is greater than, equal to, or less than at least one standard volume change rate within a standard volume change rate range corresponding to the one preconfigured tenth-type standard sound model, determining that the detected sound successfully matches the one preconfigured tenth-type standard sound model;
alternatively,
acquiring a duration corresponding to the sound detected by using the sound pickup apparatus; matching the acquired duration with at least one eleventh-type standard sound model; and if a difference between the acquired duration and a standard duration that is corresponding to one standard sound model of the at least one eleventh-type standard sound model is less than or equal to a threshold n9, determining that the detected sound successfully matches the one eleventh-type standard sound model;
alternatively,
acquiring a duration corresponding to the sound detected by using the sound pickup apparatus; matching the acquired duration with one preconfigured eleventh-type standard sound model; and if the acquired duration is greater than, equal to, or less than a standard duration corresponding to the one preconfigured eleventh-type standard sound model, determining that the detected sound successfully matches the one preconfigured eleventh-type standard sound model;
alternatively,
acquiring a duration corresponding to the sound detected by using the sound pickup apparatus; matching the acquired duration with at least one twelfth-type standard sound model; and if a difference between the acquired duration and at least one standard duration that is within a standard duration range corresponding to one standard sound model of the at least one twelfth-type standard sound model is less than or equal to a threshold n10, determining that the detected sound successfully matches the one twelfth-type standard sound model;
alternatively,
acquiring a duration corresponding to the sound detected by using the sound pickup apparatus; matching the acquired duration with one preconfigured twelfth-type standard sound model; and if the acquired duration is greater than, equal to, or less than at least one standard duration within a standard duration range corresponding to the one preconfigured twelfth-type standard sound model, determining that the detected sound successfully matches the one preconfigured twelfth-type standard sound model;
alternatively,
converting the sound detected by using the sound pickup apparatus into a corresponding sound digital signal; matching the sound digital signal, which is obtained by means of conversion, with at least one thirteenth-type standard sound model; and if a difference between the sound digital signal and a standard sound digital signal that is corresponding to one standard sound model of the at least one thirteenth-type standard sound model is less than or equal to a threshold n11, determining that the detected sound successfully matches the one thirteenth-type standard sound model.

6. The method according to claim 3, wherein:
if the distance sensor is used to detect the distance between, or the change status of the distance between the moving object and the electronic device after the alarm clock of the electronic device is triggered, the matching a behavior parameter corresponding to the detected non-contact behavior with a standard behavior parameter corresponding to the at least one standard model, and if a preset rule is met between the behavior parameter corresponding to the detected non-contact behavior and a standard behavior parameter corresponding to one standard model of the at least one standard model, determining that the detected non-contact behavior successfully matches the one standard model comprises:
matching the distance between the moving object and the electronic device and at least one first-type standard distance model, where the distance is detected by using the distance sensor; and if a difference between the distance and a standard distance that is corresponding to one standard distance model of the at least one first-type standard distance model is less than or equal to a threshold s1, determining that the detected distance successfully matches the one first-type standard distance model;
alternatively,
matching the distance between the moving object and the electronic device and at least one first-type standard distance model, where the distance is detected by using the distance sensor; and if the distance is greater than, less than, or equal to a standard distance corresponding to the one preconfigured first-type standard distance model, determining that the detected distance successfully matches the one preconfigured first-type standard distance model;
alternatively,
matching the distance between the moving object and the electronic device and at least one first-type standard distance model, where the distance is detected by using the distance sensor; and if a difference between the distance and at least one standard distance that is within a standard distance range corresponding to one standard distance model of the at least one second-type standard distance model is less than or equal to a threshold s2, determining that the detected distance successfully matches the one second-type standard distance model;
alternatively,
matching the distance between the moving object and the electronic device and one preconfigured second-type standard distance model, where the distance is detected by using the distance sensor; and if the distance is greater than, less than, or equal to at least one standard distance within a standard distance range corresponding to the one preconfigured second-type standard distance model, determining that the detected distance successfully matches the one preconfigured second-type standard distance model;
alternatively,
matching a distance change rate between the moving object and the electronic device and at least one third-type standard distance model, where the distance is detected by using the distance sensor; and if a difference between the distance change rate and a standard distance change rate that is corresponding to one standard distance model of the at least one third-type standard distance model is less than or equal to a threshold s3, determining that the detected distance change rate successfully matches the one third-type standard distance model;
alternatively,
matching a distance change rate between the moving object and the electronic device and one preconfigured third-type standard distance model, where the distance is detected by using the distance sensor; and if the distance change rate is greater than, less than, or equal to a standard distance change rate corresponding to the one preconfigured third-type standard distance model, determining that the detected distance change rate successfully matches the one preconfigured third-type standard distance model;
alternatively,
matching a distance change rate between the moving object and the electronic device and at least one fourth-type standard distance model, where the distance is detected by using the distance sensor; and if a difference between the distance change rate and at least one standard distance change rate that is within a standard distance change rate range corresponding to one standard distance model of the at least one fourth-type standard distance model is less than or equal to a threshold s4, determining that the detected distance change rate successfully matches the one fourth-type standard distance model;
alternatively,
matching a distance change rate between the moving object and the electronic device and one preconfigured fourth-type standard distance model, where the distance is detected by using the distance sensor; and if the distance change rate is greater than, less than, or equal to at least one standard distance change rate within a standard distance change rate range corresponding to the one preconfigured fourth-type standard distance model, determining that the detected distance change rate successfully matches the one preconfigured fourth-type standard distance model;
alternatively,
matching a distance change duration between the moving object and the electronic device and at least one fifth-type standard distance model, where the distance is detected by using the distance sensor; and if a difference between the distance change duration and a standard distance change duration that is corresponding to one standard distance model of the at least one fifth-type standard distance model is less than or equal to a threshold s5, determining that the detected distance change duration successfully matches the one fifth-type standard distance model;
alternatively,
matching a distance change duration between the moving object and the electronic device and one preconfigured fifth-type standard distance model, where the distance is detected by using the distance sensor; and if the distance change duration is greater than, less than, or equal to a standard distance change duration corresponding to the one preconfigured fifth-type standard distance model, determining that the detected distance change duration successfully matches the one preconfigured fifth-type standard distance model;
alternatively,
matching a distance change duration between the moving object and the electronic device and at least one sixth-type standard distance model, where the distance is detected by using the distance sensor; and if a difference between the distance change duration and at least one standard distance change duration that is within a standard distance change duration range corresponding to one standard distance model of the at least one sixth-type standard distance model is less than or equal to a threshold s6, determining that the detected distance change duration successfully matches the one sixth-type standard distance model;
alternatively,
matching a distance change duration between the moving object and the electronic device and one preconfigured sixth-type standard distance model, where the distance is detected by using the distance sensor; and if the distance change duration is greater than, less than, or equal to at least one standard distance change duration within a standard distance change duration range corresponding to the one preconfigured sixth-type standard distance model, determining that the detected distance change duration successfully matches the one preconfigured sixth-type standard distance model;
alternatively,
matching a distance change trend between the moving object and the electronic device and at least one seventh-type standard distance model, where the distance is detected by using the distance sensor; and if the distance change trend is the same as a standard distance change trend corresponding to one standard distance model of the seventh-type standard distance model, determining that the detected distance change rate successfully matches the one seventh-type standard distance model.

7. The method according to any one of claims 1 to 6, wherein:
the controlling the alarm clock of the electronic device comprises: stopping the alarm clock of the electronic device, snoozing the alarm clock of the electronic device, adjusting a volume of the alarm clock of the electronic device, or adjusting music of the alarm clock of the electronic device.

8. The method according to any one of claims 1 to 7, wherein:
the method further comprises: if the matching is successful, adjusting screen brightness of the electronic device according to a screen brightness adjustment manner corresponding to the successfully matched standard model.

9. The method according to any one of claims 1 to 8, wherein:
the method further comprises: if the matching fails, performing at least one of the following operations:
sending a control instruction to at least one second electronic device, so as to control the second electronic device to work;
gradually increasing a volume of the alarm clock to a maximum value;
if the electronic device is a communications terminal, selecting at least one telephone number to simulate an incoming call; and
if the electronic device is a communications terminal, selecting at least one telephone number to make an outgoing call.

10. An electronic device, comprising:
a detecting unit, configured to detect a non-contact behavior after an alarm clock of the electronic device is triggered, wherein the non-contact behavior comprises a sound and/or a non-contact action;
a matching unit, configured to match the non-contact behavior, which is detected by the detecting unit, with at least one standard model; and
a control unit, configured to: if the matching unit performs matching successfully, control the alarm clock of the electronic device according to an alarm clock control manner corresponding to the successfully matched standard model.

11. The electronic device according to claim 10, wherein:
the matching unit is specifically configured to match a behavior parameter corresponding to the detected non-contact behavior with a standard behavior parameter corresponding to the at least one standard model, and if a preset rule is met between the behavior parameter corresponding to the detected non-contact behavior and a standard behavior parameter corresponding to one standard model of the at least one standard model, determine that the detected non-contact behavior successfully matches the one standard model.

12. The electronic device according to claim 10 or 11, wherein:
the detecting unit is specifically configured to detect, after the alarm clock of the electronic device is triggered, the non-contact behavior in at least one of the following manners: detect a motion trail of a moving object by using a camera after the alarm clock of the electronic device is triggered, detect an ambient sound by using a sound pickup apparatus after the alarm clock of the electronic device is triggered, and detect a distance between, or a change status of a distance between the moving object and the electronic device by using a distance sensor after the alarm clock of the electronic device is triggered.

13. The electronic device according to claim 12, wherein:
if the detecting unit detects the motion trail of the moving object by using the camera after the alarm clock of the electronic device is triggered, the matching unit is specifically configured to:
determine a motion direction corresponding to the motion trail of the moving object, wherein the motion trail is detected by using the camera; match the determined motion direction with at least one first-type standard motion trail model; and if a difference between the determined motion direction and a standard motion direction that is corresponding to one standard motion trail model of the at least one first-type standard motion trail model is less than or equal to a threshold m1, determine that the detected motion trail successfully matches the one first-type standard motion trail model;
alternatively,
determine a pattern corresponding to the motion trail of the moving object, wherein the motion trail is detected by using the camera; match the determined pattern with at least one second-type standard motion trail model; and if similarity between the determined pattern and a standard pattern that is corresponding to one standard motion trail model of the at least one second-type standard motion trail model is greater than or equal to a threshold m2, determine that the detected motion trail successfully matches the one second-type standard motion trail model;
alternatively,
determine a motion speed corresponding to the motion trail of the moving object, wherein the motion trail is detected by using the camera; match the determined motion speed with at least one third-type standard motion trail model; and if a difference between the determined motion speed and a standard motion speed that is corresponding to one standard motion trail model of the at least one third-type standard motion trail model is less than or equal to a threshold m3, determine that the detected motion trail successfully matches the one third-type standard motion trail model;
alternatively,
determine a motion speed corresponding to the motion trail of the moving object, wherein the motion trail is detected by using the camera; match the determined motion speed with one preconfigured third-type standard motion trail model; and if the determined motion speed is greater than, equal to, or less than a standard motion speed corresponding to the one preconfigured third-type standard motion trail model, determine that the detected motion trail successfully matches the one preconfigured third-type standard motion trail model;
alternatively,
determine a motion speed corresponding to the motion trail of the moving object, wherein the motion trail is detected by using the camera; match the determined motion speed with at least one fourth-type standard motion trail model; and if a difference between the determined motion speed and at least one standard motion speed that is within a standard motion speed range corresponding to one standard motion trail model of the at least one fourth-type standard motion trail model is less than or equal to a threshold m4, determine that the detected motion trail successfully matches the one fourth-type standard motion trail model;
alternatively,
determine a motion speed corresponding to the motion trail of the moving object, wherein the motion trail is detected by using the camera; match the determined motion speed with one preconfigured fourth-type standard motion trail model; and if the determined motion speed is greater than, equal to, or less than at least one standard motion speed within a standard motion speed range corresponding to the one preconfigured fourth-type standard motion trail model, determine that the detected motion trail successfully matches the one preconfigured fourth-type standard motion trail model;
alternatively,
determine a motion displacement corresponding to the motion trail of the moving object, wherein the motion trail is detected by using the camera; match the determined motion displacement with at least one fifth-type standard motion trail model; and if a difference between the determined motion displacement and a standard motion displacement that is corresponding to one standard motion trail model of the at least one fifth-type standard motion trail model is less than or equal to a threshold m5, determine that the detected motion trail successfully matches the one fifth-type standard motion trail model;
alternatively,
determine a motion displacement corresponding to the motion trail of the moving object, wherein the motion trail is detected by using the camera; match the determined motion displacement with one preconfigured fifth-type standard motion trail model; and if the determined motion displacement is greater than, less than, or equal to a standard motion displacement corresponding to the one preconfigured fifth-type standard motion trail model, determine that the detected motion trail successfully matches the one preconfigured fifth-type standard motion trail model;
alternatively,
determine a motion displacement corresponding to the motion trail of the moving object, wherein the motion trail is detected by using the camera; match the determined motion displacement with at least one sixth-type standard motion trail model; and if a difference between the determined motion displacement and at least one standard motion displacement that is within a standard motion displacement range corresponding to one standard motion trail model of the at least one sixth-type standard motion trail model is less than or equal to a threshold m6, determine that the detected motion trail successfully matches the one sixth-type standard motion trail model;
alternatively,
determine a motion displacement corresponding to the motion trail of the moving object, wherein the motion trail is detected by using the camera; match the determined motion displacement with one preconfigured sixth-type standard motion trail model; and if the determined motion displacement is greater than, less than, or equal to at least one standard motion displacement within a standard motion displacement range corresponding to the one preconfigured sixth-type standard motion trail model, determine that the detected motion trail successfully matches the one preconfigured sixth-type standard motion trail model;
alternatively,
determine a motion duration corresponding to the motion trail of the moving object, wherein the motion trail is detected by using the camera; match the determined motion duration with at least one seventh-type standard motion trail model; and if a difference between the determined motion duration and a standard motion duration that is corresponding to one standard motion trail model of the at least one seventh-type standard motion trail model is less than or equal to a threshold m7, determine that the detected motion trail successfully matches the one seventh-type standard motion trail model;
alternatively,
determine a motion duration corresponding to the motion trail of the moving object, wherein the motion trail is detected by using the camera; match the determined motion duration with one preconfigured seventh-type standard motion trail model; and if the determined motion duration is greater than, less than, or equal to a standard motion duration corresponding to the one preconfigured seventh-type standard motion trail model, determine that the detected motion trail successfully matches the one preconfigured seventh-type standard motion trail model;
alternatively,
determine a motion duration corresponding to the motion trail of the moving object, wherein the motion trail is detected by using the camera; match the determined motion duration with at least one eighth-type standard motion trail model; and if a difference between the determined motion duration and at least one standard motion duration that is within a standard motion duration range corresponding to one standard motion trail model of the at least one eighth-type standard motion trail model is less than or equal to a threshold m8, determine that the detected motion trail successfully matches the one eighth-type standard motion trail model;
alternatively,
determine a motion duration corresponding to the motion trail of the moving object, wherein the motion trail is detected by using the camera; match the determined motion duration with one preconfigured eighth-type standard motion trail model; and if the determined motion duration is greater than, less than, or equal to at least one standard motion duration within a standard motion duration range corresponding to the one preconfigured eighth-type standard motion trail model, determine that the detected motion trail successfully matches the one preconfigured eighth-type standard motion trail model.

14. The electronic device according to claim 12, wherein if the detecting unit detects the ambient sound by using the sound pickup apparatus after the alarm clock of the electronic device is triggered, the matching unit is specifically configured to:
acquire a volume value corresponding to the sound detected by using the sound pickup apparatus; match the acquired volume value with at least one first-type standard sound model; and if a difference between the acquired volume value and a standard volume value that is corresponding to one standard sound model of the at least one first-type standard sound model is less than or equal to a threshold n1, determine that the detected sound successfully matches the one first-type standard sound model;
alternatively,
acquire a volume value corresponding to the sound detected by using the sound pickup apparatus; match the acquired volume value with one preconfigured first-type standard sound model; and if the acquired volume value is greater than, equal to, or less than a standard volume value corresponding to the one preconfigured first-type standard sound model, determine that the detected sound successfully matches the one preconfigured first-type standard sound model;
alternatively,
acquire a volume value corresponding to the sound detected by using the sound pickup apparatus; match the acquired volume value with at least one second-type standard sound model; and if a difference between the acquired volume value and at least one standard volume value that is within a standard volume value range corresponding to one standard sound model of the at least one second-type standard sound model is less than or equal to a threshold n2, determine that the detected sound successfully matches the one second-type standard sound model;
alternatively,
acquire a volume value corresponding to the sound detected by using the sound pickup apparatus; match the acquired volume value with one preconfigured second-type standard sound model; and if the acquired volume value is greater than, equal to, or less than at least one standard volume value within a standard volume value range corresponding to the one preconfigured second-type standard sound model, determine that the detected sound successfully matches the one preconfigured second-type standard sound model;
alternatively,
acquire an audio frequency value corresponding to the sound detected by using the sound pickup apparatus; match the acquired audio frequency value with at least one third-type standard sound model; and if a difference between the acquired audio frequency value and a standard audio frequency value that is corresponding to one standard sound model of the at least one third-type standard sound model is less than or equal to a threshold n3, determine that the detected sound successfully matches the one third-type standard sound model;
alternatively,
acquire an audio frequency value corresponding to the sound detected by using the sound pickup apparatus; match the acquired audio frequency value with one preconfigured third-type standard sound model; and if the acquired audio frequency value is greater than, equal to, or less than a standard audio frequency value corresponding to the one preconfigured third-type standard sound model, determine that the detected sound successfully matches the one preconfigured third-type standard sound model;
alternatively,
acquire an audio frequency value corresponding to the sound detected by using the sound pickup apparatus; match the acquired audio frequency value with at least one fourth-type standard sound model; and if a difference between the acquired audio frequency value and at least one standard audio frequency value that is within a standard audio frequency value range corresponding to one standard sound model of the at least one fourth-type standard sound model is less than or equal to a threshold n4, determine that the detected sound successfully matches the one fourth-type standard sound model;
alternatively,
acquire an audio frequency value corresponding to the sound detected by using the sound pickup apparatus; match the acquired audio frequency value with one preconfigured fourth-type standard sound model; and if the acquired audio frequency value is greater than, equal to, or less than at least one standard audio frequency value within a standard audio frequency value range corresponding to the one preconfigured fourth-type standard sound model, determine that the detected sound successfully matches the one preconfigured fourth-type standard sound model;
alternatively,
acquire an audio frequency change trend corresponding to the sound detected by using the sound pickup apparatus; match the acquired audio frequency change trend with at least one fifth-type standard sound model; and if the acquired audio frequency change trend is the same as a standard audio frequency change trend corresponding to one standard sound model of the at least one fifth-type standard sound model, determine that the detected sound successfully matches the one fifth-type standard sound model;
alternatively,
acquire a volume change trend corresponding to the sound detected by using the sound pickup apparatus; match the acquired volume change trend with at least one sixth-type standard sound model; and if the acquired volume change trend is the same as a standard volume change trend corresponding to one standard sound model of the at least one sixth-type standard sound model, determine that the detected sound successfully matches the one sixth-type standard sound model;
alternatively,
acquire an audio frequency change rate corresponding to the sound detected by using the sound pickup apparatus; match the acquired audio frequency change rate with at least one seventh-type standard sound model; and if a difference between the acquired audio frequency change rate and a standard audio frequency change rate that is corresponding to one standard sound model of the at least one seventh-type standard sound model is less than or equal to a threshold n5, determine that the detected sound successfully matches the one seventh-type standard sound model;
alternatively,
acquire an audio frequency change rate corresponding to the sound detected by using the sound pickup apparatus; match the acquired audio frequency change rate with one preconfigured seventh-type standard sound model; and if the acquired audio frequency change rate is greater than, equal to, or less than a standard audio frequency change rate corresponding to the one preconfigured seventh-type standard sound model, determine that the detected sound successfully matches the one preconfigured seventh-type standard sound model;
alternatively,
acquire an audio frequency change rate corresponding to the sound detected by using the sound pickup apparatus; match the acquired audio frequency change rate with at least one eighth-type standard sound model; and if a difference between the acquired audio frequency change rate and at least one audio frequency change rate that is within a standard audio frequency change rate range corresponding to one standard sound model of the at least one eighth-type standard sound model is less than or equal to a threshold n6, determine that the detected sound successfully matches the one eighth-type standard sound model;
alternatively,
acquire an audio frequency change rate corresponding to the sound detected by using the sound pickup apparatus; match the acquired audio frequency change rate with one preconfigured eighth-type standard sound model; and if the acquired audio frequency change rate is greater than, equal to, or less than at least one standard audio frequency change rate within a standard audio frequency change rate range corresponding to the one preconfigured eighth-type standard sound model, determine that the detected sound successfully matches the one preconfigured eighth-type standard sound model;
alternatively,
acquire a volume change rate corresponding to the sound detected by using the sound pickup apparatus; match the acquired volume change rate with at least one ninth-type standard sound model; and if a difference between the acquired volume change rate and a standard volume change rate that is corresponding to one standard sound model of the at least one ninth-type standard sound model is less than or equal to a threshold n7, determine that the detected sound successfully matches the one ninth-type standard sound model;
alternatively,
acquire a volume change rate corresponding to the sound detected by using the sound pickup apparatus; match the acquired volume change rate with one preconfigured ninth-type standard sound model; and if the acquired volume change rate is greater than, equal to, or less than a standard volume change rate corresponding to the one preconfigured ninth-type standard sound model, determine that the detected sound successfully matches the one preconfigured ninth-type standard sound model;
alternatively,
acquire a volume change rate corresponding to the sound detected by using the sound pickup apparatus; match the acquired volume change rate with at least one tenth-type standard sound model; and if a difference between the acquired volume change rate and at least one volume change rate that is within a standard volume change rate range corresponding to one standard sound model of the at least one tenth-type standard sound model is less than or equal to a threshold n8, determine that the detected sound successfully matches the one tenth-type standard sound model;
alternatively,
acquire a volume change rate corresponding to the sound detected by using the sound pickup apparatus; match the acquired volume change rate with one preconfigured tenth-type standard sound model; and if the acquired volume change rate is greater than, equal to, or less than at least one standard volume change rate within a standard volume change rate range corresponding to the one preconfigured tenth-type standard sound model, determine that the detected sound successfully matches the one preconfigured tenth-type standard sound model;
alternatively,
acquire a duration corresponding to the sound detected by using the sound pickup apparatus; match the acquired duration with at least one eleventh-type standard sound model; and if a difference between the acquired duration and a standard duration that is corresponding to one standard sound model of the at least one eleventh-type standard sound model is less than or equal to a threshold n9, determine that the detected sound successfully matches the one eleventh-type standard sound model;
alternatively,
acquire a duration corresponding to the sound detected by using the sound pickup apparatus; match the acquired duration with one preconfigured eleventh-type standard sound model; and if the acquired duration is greater than, equal to, or less than a standard duration corresponding to the one preconfigured eleventh-type standard sound model, determine that the detected sound successfully matches the one preconfigured eleventh-type standard sound model;
alternatively,
acquire a duration corresponding to the sound detected by using the sound pickup apparatus; match the acquired duration with at least one twelfth-type standard sound model; and if a difference between the acquired duration and at least one standard duration that is within a standard duration range corresponding to one standard sound model of the at least one twelfth-type standard sound model is less than or equal to a threshold n10, determine that the detected sound successfully matches the one twelfth-type standard sound model;
alternatively,
acquire a duration corresponding to the sound detected by using the sound pickup apparatus; match the acquired duration with one preconfigured twelfth-type standard sound model; and if the acquired duration is greater than, equal to, or less than at least one standard duration within a standard duration range corresponding to the one preconfigured twelfth-type standard sound model, determine that the detected sound successfully matches the one preconfigured twelfth-type standard sound model;
alternatively,
convert the sound detected by using the sound pickup apparatus into a corresponding sound digital signal; match the sound digital signal, which is obtained by means of conversion, with at least one thirteenth-type standard sound model; and if a difference between the sound digital signal and a standard sound digital signal that is corresponding to one standard sound model of the at least one thirteenth-type standard sound model is less than or equal to a threshold n11, determine that the detected sound successfully matches the one thirteenth-type standard sound model.

15. The electronic device according to claim 12, wherein if the detecting unit detects the distance between, or the change status of the distance between the moving object and the electronic device by using the distance sensor after the alarm clock of the electronic device is triggered, the matching unit is specifically configured to:
match the distance between the moving object and the electronic device and at least one first-type standard distance model, where the distance is detected by using the distance sensor; and if a difference between the distance and a standard distance that is corresponding to one standard distance model of the at least one first-type standard distance model is less than or equal to a threshold s1, determine that the detected distance successfully matches the one first-type standard distance model;
alternatively,
match the distance between the moving object and the electronic device and one preconfigured first-type standard distance model, where the distance is detected by using the distance sensor; and if the distance is greater than, less than, or equal to a standard distance corresponding to the one preconfigured first-type standard distance model, determine that the detected distance successfully matches the one preconfigured first-type standard distance model;
alternatively,
match the distance between the moving object and the electronic device and at least one first-type standard distance model, where the distance is detected by using the distance sensor; and if a difference between the distance and at least one standard distance that is within a standard distance range corresponding to one standard distance model of the at least one second-type standard distance model is less than or equal to a threshold s2, determine that the detected distance successfully matches the one second-type standard distance model;
alternatively,
match the distance between the moving object and the electronic device and one preconfigured second-type standard distance model, where the distance is detected by using the distance sensor; and if the distance is greater than, less than, or equal to at least one standard distance within a standard distance range corresponding to the one preconfigured second-type standard distance model, determine that the detected distance successfully matches the one preconfigured second-type standard distance model;
alternatively,
match a distance change rate between the moving object and the electronic device and at least one third-type standard distance model, where the distance is detected by using the distance sensor; and if a difference between the distance change rate and a standard distance change rate that is corresponding to one standard distance model of the at least one third-type standard distance model is less than or equal to a threshold s3, determine that the detected distance change rate successfully matches the one third-type standard distance model;
alternatively,
match a distance change rate between the moving object and the electronic device and one preconfigured third-type standard distance model, where the distance is detected by using the distance sensor; and if the distance change rate is greater than, less than, or equal to a standard distance change rate corresponding to the one preconfigured third-type standard distance model, determine that the detected distance change rate successfully matches the one preconfigured third-type standard distance model;
alternatively,
match a distance change rate between the moving object and the electronic device and at least one fourth-type standard distance model, where the distance is detected by using the distance sensor; and if a difference between the distance change rate and at least one standard distance change rate that is within a standard distance change rate range corresponding to one standard distance model of the at least one fourth-type standard distance model is less than or equal to a threshold s4, determine that the detected distance change rate successfully matches the one fourth-type standard distance model;
alternatively,
match a distance change rate between the moving object and the electronic device and one preconfigured fourth-type standard distance model, where the distance is detected by using the distance sensor; and if the distance change rate is greater than, less than, or equal to at least one standard distance change rate within a standard distance change rate range corresponding to the one preconfigured fourth-type standard distance model, determine that the detected distance change rate successfully matches the one preconfigured fourth-type standard distance model;
alternatively,
match a distance change duration between the moving object and the electronic device and at least one fifth-type standard distance model, where the distance is detected by using the distance sensor; and if a difference between the distance change duration and a standard distance change duration that is corresponding to one standard distance model of the at least one fifth-type standard distance model is less than or equal to a threshold s5, determine that the detected distance change duration successfully matches the one fifth-type standard distance model;
alternatively,
match a distance change duration between the moving object and the electronic device and one preconfigured fifth-type standard distance model, where the distance is detected by using the distance sensor; and if the distance change duration is greater than, less than, or equal to a standard distance change duration corresponding to the one preconfigured fifth-type standard distance model, determine that the detected distance change duration successfully matches the one preconfigured fifth-type standard distance model;
alternatively,
match a distance change duration between the moving object and the electronic device and at least one sixth-type standard distance model, where the distance is detected by using the distance sensor; and if a difference between the distance change duration and at least one standard distance change duration that is within a standard distance change duration range corresponding to one standard distance model of the at least one sixth-type standard distance model is less than or equal to a threshold s6, determine that the detected distance change duration successfully matches the one sixth-type standard distance model;
alternatively,
match a distance change duration between the moving object and the electronic device and one preconfigured sixth-type standard distance model, where the distance is detected by using the distance sensor; and if the distance change duration is greater than, less than, or equal to at least one standard distance change duration within a standard distance change duration range corresponding to the one preconfigured sixth-type standard distance model, determine that the detected distance change duration successfully matches the one preconfigured sixth-type standard distance model;
alternatively,
match a distance change trend between the moving object and the electronic device and at least one seventh-type standard distance model, where the distance is detected by using the distance sensor; and if the distance change trend is the same as a standard distance change trend corresponding to one standard distance model of the seventh-type standard distance model, determine that the detected distance change rate successfully matches the one seventh-type standard distance model.
